(19)

**Europäisches Patentamt**
**European Patent Office**
**Office européen des brevets**

(11) **EP 3 641 165 B1**

(12) **EUROPEAN PATENT SPECIFICATION**

(45) Date of publication and mention
of the grant of the patent:
**25.05.2022   Bulletin 2022/21**

(21) Application number: **17927521.9**

(22) Date of filing: **28.09.2017**

(51) International Patent Classification (IPC):
*H04B 17/12* (2015.01)      *H01Q 21/00* (2006.01)
*G01S 7/40* (2006.01)      *H01Q 3/26* (2006.01)

(52) Cooperative Patent Classification (CPC):
**G01S 7/40; H01Q 3/267; H04B 17/12**

(86) International application number:
**PCT/CN2017/104043**

(87) International publication number:
**WO 2019/061173 (04.04.2019 Gazette 2019/14)**

(54) **METHOD, DEVICE AND SYSTEM FOR CALIBRATING ARRAY ANTENNAS**

VERFAHREN, VORRICHTUNG UND SYSTEM ZUR KALIBRIERUNG VON GRUPPENANTENNEN

PROCÉDÉ, DISPOSITIF ET SYSTÈME D'ÉTALONNAGE D'ANTENNES RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.04.2020   Bulletin 2020/17**

(73) Proprietor: **Huawei Technologies Co., Ltd.**
**Longgang District**
**Shenzhen, Guangdong 518129 (CN)**

(72) Inventors:
• **HE, Zhaojun**
  **Shenzhen**
  **Guangdong 518129 (CN)**
• **MA, Yingdong**
  **Shenzhen**
  **Guangdong 518129 (CN)**
• **LI, Xiaodong**
  **Shenzhen**
  **Guangdong 518129 (CN)**
• **ZHANG, Yong**
  **Chengdu**
  **Sichuan 610031 (CN)**
• **GUO, Yong**
  **Shenzhen**
  **Guangdong 518129 (CN)**

• **WANG, Liping**
  **Shenzhen**
  **Guangdong 518129 (CN)**

(74) Representative: **Gill Jennings & Every LLP**
**The Broadgate Tower**
**20 Primrose Street**
**London EC2A 2ES (GB)**

(56) References cited:
**EP-A2- 1 513 271        CN-A- 1 399 846
CN-A- 1 830 159        CN-A- 101 582 710
CN-A- 102 624 472      CN-A- 104 506 253
JP-A- 2017 116 442      US-A1- 2010 150 013**

• **SORACE R: "Phased array calibration", PHASED ARRAY SYSTEMS AND TECHNOLOGY, 2000. PROCEEDINGS. 2000 IEEE INTE RNATIONAL CONFERENCE ON DANA POINT, CA, USA 21-25 MAY 2000, PISCATAWAY, NJ, USA,IEEE, US, 21 May 2000 (2000-05-21), pages 533-536, XP010504648, DOI: 10.1109/PAST.2000.859013 ISBN: 978-0-7803-6345-8**

## Description

### TECHNICAL FIELD

This application relates to the field of wireless communications technologies, and in particular, to a method, an apparatus, and a system for calibrating an array antenna.

### BACKGROUND

A phased array antenna can implement beam scanning and long-distance transmission by using a plurality of transmit antennas and a spatial beamforming technology. A premise of implementing phase control is to correct a signal error between transmit signals of the array antenna, for example, correct an amplitude error of signals and/or correct a phase error of signals. When an amplitude error and/or a phase error exists between signals transmitted by different antennas, a beam vectorial resultant deviation occurs, and finally, a main lobe gain of the beam is decreased and a side lobe gain of the beam is increased, thereby affecting communication performance. Therefore, before the array antenna is put into use, communication performance of the array antenna needs to be improved by using a calibration technology.

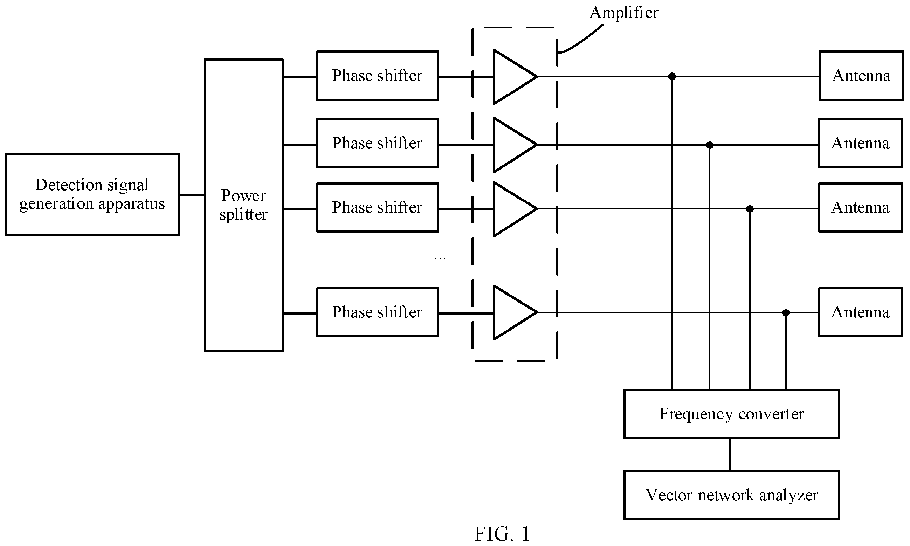

As shown in FIG. 1, in a method, generally used in the prior art, for calibrating an array antenna, a calibration signal needs to be collected from a signal input port of each transmit antenna, frequency conversion is performed on the collected calibration signal and then the calibration signal is input into a vector network analyzer. A signal error between signals transmitted by different antennas is calculated by using the vector network analyzer, and further, the array antenna is calibrated based on the calculated signal error. However, according to the method, shown in FIG. 1, for calibrating an array antenna, a collection circuit needs to be constructed at a signal input port of each antenna in the array antenna to collect a calibration signal. The array antenna includes a relatively large quantity of antennas, it takes an excessively long time to establish a collection circuit configured to detect a signal error between the antennas, the implementation complexity is high, and therefore, this does not facilitate fast calibration of the array antenna.

In conclusion, the method, generally used in the prior art, for calibrating an array antenna does not facilitate fast calibration of the array antenna.

SORACE R: "Phased array calibration", PHASED ARRAY SYSTEMS AND TECHNOLOGY, 2000. PROCEEDINGS. 2000 IEEE INTERNATIONAL CONFERENCE ON DANA POINT, CA, USA 21-25 MAY 2000, PISCATAWAY, NJ, USA,IEEE, US, 21 May 2000 (2000-05-21 ), pages 533-536 relates to phased array calibration.

US 2010/150013 relates to calibration method, communication system, frequency control method, and communication device.

EP 1513271 relates to method and apparatus for determining spatial signatures for calibrating a communication station having an antenna array.

### SUMMARY

Aspects of this application provide a method, an apparatus, and a system for calibrating an array antenna, to resolve a problem that an array antenna calibration method generally used in the prior art does not facilitate fast calibration of the array antenna.

Various aspects of the present disclosure have been defined in the independent claims. Further technical features of each of these aspects have been defined in the respective dependent claims.

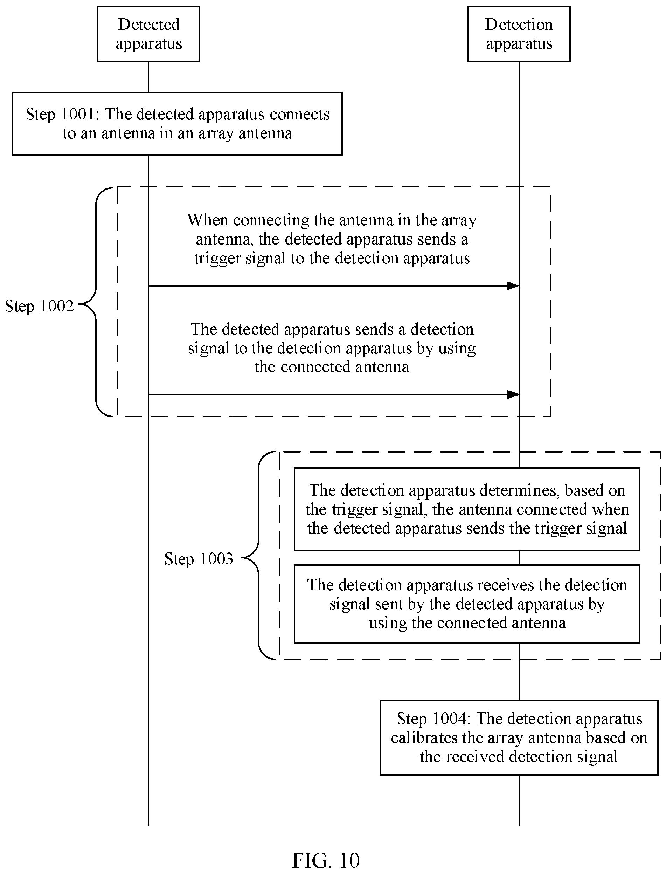

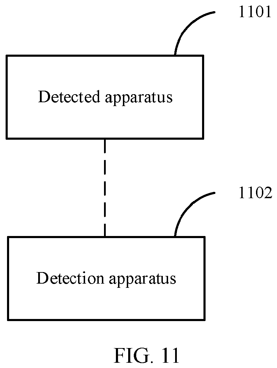

The method described with reference to FIG. 10 is not claimed in the present application. The system and the corresponding method as described in conjunction with FIGS. 11 to 17 are not part of the claimed invention.

According to the solution in this disclosure, the detected apparatus connects to the antenna in the array antenna, and sends the detection signal to the detection apparatus by using the connected antenna; and sends the trigger signal to the detection apparatus when the detected apparatus connects to the antenna. After receiving the trigger signal, the detection apparatus can determine the antenna connected when the detected apparatus sends the trigger signal, receive the detection signal sent by the connected antenna, and calibrate the array antenna based on the detection signal sent by the detected apparatus. In the array antenna calibration solution, a collection circuit does not need to be constructed at an input port of each antenna in the array antenna, therefore, array antenna calibration complexity is decreased, and a time for constructing the collection circuit in an array antenna calibration process is reduced, thereby improving array antenna calibration efficiency.

### BRIEF DESCRIPTION OF DRAWINGS

FIG. 1 is a schematic structural diagram of a calibration circuit used in a method for calibrating an array antenna in the prior art;

FIG. 2 is a schematic diagram of a system for calibrating an array antenna according to an aspect of this application;

FIG. 3 is a schematic diagram of a detected apparatus for calibrating an array antenna according to an aspect of this application;

FIG. 4 is a schematic diagram of a detection apparatus for calibrating an array antenna according to an aspect of this application;

FIG. 5 is a schematic diagram of a specific structure of a system for calibrating an array antenna according to an aspect of this application;

FIG. 6 is a schematic diagram of a specific structure of another system for calibrating an array antenna according to an aspect of this application;

FIG. 7 is a schematic signal diagram of a detection signal and a trigger signal according to an aspect of this application;

FIG. 8 is a schematic diagram of steps for calibrating an array antenna based on a received detection signal according to an aspect of this application;

FIG. 9 is a schematic diagram of steps of a method for calibrating an array antenna according to an aspect of this application;

FIG. 10 is a schematic diagram of steps of another method for calibrating an array antenna according to an aspect of this application;

FIG. 11 is a schematic diagram of another system for calibrating an array antenna according to an aspect of this application;

FIG. 12 is a schematic diagram of another detected apparatus for calibrating an array antenna according to an aspect of this application;

FIG. 13 is a schematic diagram of another detection apparatus for calibrating an array antenna according to an aspect of this application;

FIG. 14 is a schematic diagram of a specific structure of still another system for calibrating an array antenna according to an aspect of this application;

FIG. 15 is a schematic diagram of a specific structure of yet another system for calibrating an array antenna according to an aspect of this application;

FIG. 16 is a schematic signal diagram of a detection signal and a trigger signal according to an aspect of this application; and

FIG. 17 is a schematic diagram of steps of still another method for calibrating an array antenna according to an aspect of this application.

## DESCRIPTION OF ASPECTS

To make the objectives, technical solutions, and advantages of this disclosure clearer, the following further describes the implementations of this disclosure in detail with reference to the accompanying drawings. The implementations described below are not all claimed, they are included to help understanding the context of the disclosure. While the description often refers to aspects, the aspects of the disclosure are those which comprise at least all the features of an independent claim. Any aspect which does not fall within the scope of the claims does not form part of the disclosure, but rather included as an illustrative example that is useful for understanding the disclosure.

The method described with reference to FIG. 10 is not claimed in the present application. The system and the corresponding method as described in conjunction with FIGS. 11 to 17 are not part of the claimed invention.

A method, an apparatus, and a system for calibrating an array antenna according to aspects of this application may be applied to calibration of an array antenna such as a phased array antenna, which uses a multiple-input multiple-output (Multiple Input Multiple Output, MIMO) technology. The array antenna in the aspects of this application is widely applied to wireless mobile communications scenarios of mobile communications systems, including but not limited to a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, a long term evolution advanced (Advanced long term evolution, LTE-A) system, a universal mobile telecommunications system (Universal Mobile Telecommunication System, UMTS), an evolved long term evolution (evolved Long Term Evolution, eLTE) system, or 5G (for example, a new radio (New Radio, NR) system). It may be understood that in the aspects of this application, the array antenna has at least two antennas arranged in a form of an array according to a specific arrangement rule, and in use, the array antenna performs wireless communication by using at least one antenna. In an implementation, the array antenna further includes a device such as an antenna phase shifter or an amplifier, necessary for sending a signal by an antenna in the array antenna.

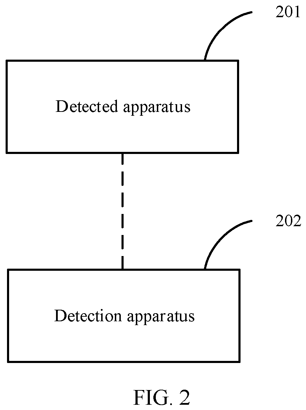

With reference to the foregoing descriptions, FIG. 2 is a schematic structural diagram of a first system for calibrating an array antenna according to an aspect of this application. Referring to FIG. 2, the system includes:

a detected apparatus 201, configured to connect to an antenna in the array antenna, and send a detection signal to a detection apparatus by using the connected antenna; and send a trigger signal to the detection apparatus when connecting to the antenna, where the trigger signal includes information indicating that the detected apparatus switches the connected antenna; and

the detection apparatus 202, configured to: after receiving the trigger signal, determine the antenna connected when the detected apparatus sends the trigger signal; receive the detection signal sent by the detected apparatus by using the connected antenna; and calibrate the array antenna based on the received detection signal.

In the foregoing system, when connecting to the antenna in the array antenna, the detected apparatus 201 sends, to the detection apparatus 202, the trigger signal including the information indicating that the detected apparatus 201 switches the connected antenna. After receiving the trigger signal sent by the detected apparatus 201, the detection apparatus 202 determines the antenna connected when the detected apparatus 201 sends the trigger signal, and receives the detection signal sent by the detected apparatus 201 by using the connected antenna, and the detection apparatus 202 can calibrate the array antenna based on the received detection signal. In this way, a collection circuit does not need to be constructed on an input port of each antenna in the array antenna in an array antenna calibration process, therefore, array antenna calibration complexity can be reduced, and a time required for array antenna calibration can be reduced, so that array antenna calibration efficiency can be improved.

It should be noted that, in this aspect of this application, the detected apparatus may switch the connected antenna by using a channel switch, where the channel switch may be a single-pole multi-throw switch or the like, and the detected apparatus 201 may control, by using a processor, the channel switch to switch the connected antenna. In a possible implementation, the detected apparatus 201 may be a detected apparatus separated from the array antenna, and is connected to the array antenna by using the channel switch when array antenna calibration is performed. In addition, in another possible implementation, the detected apparatus 201 may be an antenna signal sending apparatus including the array antenna, and is configured to send a signal by using the array antenna, and each output end of the channel switch of the detected apparatus 201 is connected to one antenna in the array antenna. In addition, the detected apparatus 201 sends the detection signal to the detection apparatus by using the connected antenna, where the detection signal may be a detection signal sent by a detection signal generation apparatus. For example, the detection signal generation apparatus may be a sine wave generator, and the detection signal may be a sine wave signal generated by the sine wave generator.

In this aspect of this application, the trigger signal sent by the detected apparatus 201 to the detection apparatus 202 when the detected apparatus 201 connects to the antenna includes information indicating that the detected apparatus 201 switches the connected antenna. For example, the detected apparatus sends a trigger signal including preset information to the detection apparatus, so that the detection apparatus determines that the signal is a trigger signal based on the preset information. Alternatively, the detected apparatus sends a trigger signal in a preset form to the detection apparatus. For example, a rising edge is preset to represent a trigger signal, so that the detection apparatus determines that the signal is a trigger signal based on the preset form.

The detected apparatus 201 may control, by using a processor, a transceiver to send a trigger signal to the detection apparatus 202. Correspondingly, the detection apparatus 202 receives the trigger signal by using a corresponding transceiver. The transceiver of the detected apparatus 201 includes a sending module, and the transceiver of the detection apparatus 202 includes a receiving module. In this aspect of this application, the transceiver may be a wired or wireless transceiver, for example, an SMJ connector, an SMA connector (Sub-Miniature-type A Connector), a bayonet nut connector (BNC, Bayonet Nut Connector), a nut connector (Nut Connector), and other coaxial cable interfaces or wireless transceivers. A feasible implementation when the detected apparatus 201 sends a trigger signal is as follows: when controlling, by using the processor, the channel switch to switch a connected antenna, the detected apparatus 201 may control, by using the processor, the transceiver to send a trigger signal to the detection apparatus 202.

In this aspect of this application, the detected apparatus 201 sends a detection signal to the detection apparatus 202 by using the connected antenna in the array antenna. Correspondingly, a collection antenna is disposed in the detection apparatus 202, and is configured to receive the detection signal sent by the detected apparatus 201 by using the array antenna.

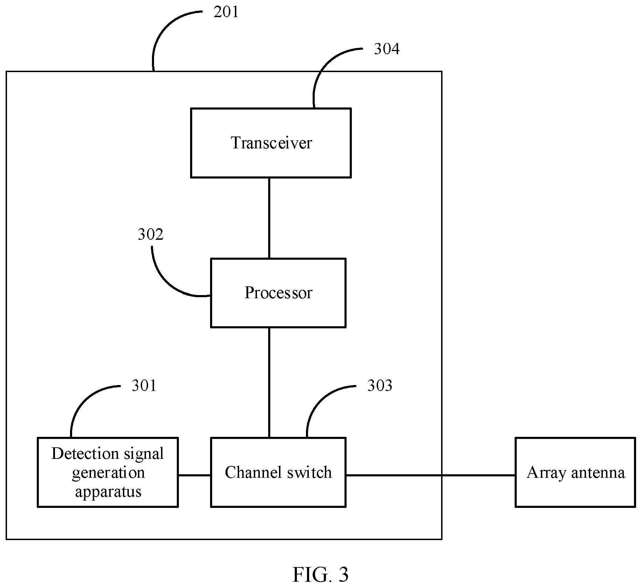

Based on the system for calibrating an array antenna shown in FIG. 2, an aspect of this application provides a detected apparatus for calibrating an array antenna. As shown in FIG. 3, in a possible structure of the detected apparatus 201 in this aspect of this application, the detected apparatus 201 includes: a detection signal generation apparatus 301, configured to generate a detection signal; a processor 302; a channel switch 303, configured to connect to an antenna in the array antenna; and a transceiver 304, used for communication between the detected apparatus and a detection apparatus, where the transceiver 304 may be a transmitter. As shown in FIG. 3, in a possible implementation, the processor 302 may be configured to control the channel switch 303 to connect to the antenna in the array antenna, so that a detection signal is sent to the detection apparatus by using the connected antenna, where the detection signal may be generated by the detection signal generation apparatus 301. The processor 302 may control the channel switch 303 to connect to different antennas in the array antenna based on a preset time interval. The processor 302 may further control the transceiver 304 to send a trigger signal to the detection apparatus when the channel switch 303 connects to an antenna, where the trigger signal includes information indicating that the connected antenna is switched.

The processor 302 may be a general-purpose central processing unit (central processing unit, CPU), a microprocessor, an application-specific integrated circuit (application specific integrated circuit, ASIC), or one or more integrated circuits, configured to perform related operations to implement the technical solutions according to the aspects of this application. In addition, the detected apparatus 201 may further include a memory. The memory may be configured to store code for execution of the processor 302, to implement the method performed by the detected apparatus 201 in this aspect of this application.

Based on the foregoing structure, when controlling the channel switch 303 to connect to the antenna in the array antenna, the processor 302 in the detected apparatus 201 controls the transceiver 304 to send the trigger signal to the detection apparatus, so that the detection apparatus can determine, based on the trigger signal, an antenna for sending the detection signal; and after receiving the detection signal sent by the connected antenna, the detection apparatus implements fast calibration on the array antenna based on the received detection signal.

It should be noted that, although only the detection signal generation apparatus 301, the processor 302, the channel switch 303, and the transceiver 304 are shown in the detected apparatus 201 shown in FIG. 3, a person skilled in the art should understand that, in a specific implementation process, the detected apparatus 201 further includes another device required for implementing normal operation. In addition, a person skilled in the art should understand that, according to a specific requirement, the detected apparatus 201 may further include a hardware device for implementing another additional function. In addition, a person skilled in the art should understand that the detected apparatus 201 may include only devices or modules necessary for implementing this aspect of this application, and does not need to include all devices shown in FIG. 3. A person of ordinary skill in the art may understand that all or some of the processes of the methods in the aspects may be implemented by a computer program instructing relevant hardware. The program may be stored in a computer readable storage medium. When the program runs, the processes of the methods in the aspects are performed. The foregoing storage medium may include: a magnetic disk, an optical disc, a read-only memory (read-only memory, ROM), or a random access memory (random access memory, RAM), or the like.

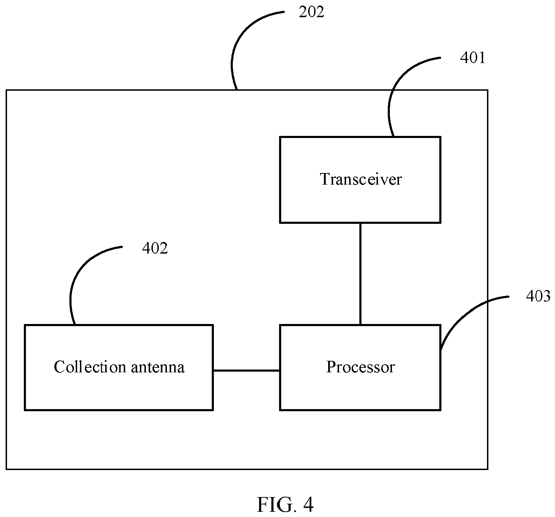

Based on the system for calibrating an array antenna shown in FIG. 2, an aspect of this application provides a detection apparatus for calibrating an array antenna. As shown in FIG. 4, in a possible structure of the detection apparatus 202 in this aspect of this application, the detection apparatus 202 includes: a transceiver 401, used for communication between the detection apparatus 202 and a detected apparatus; a collection antenna 402, configured to receive a detection signal sent by using an antenna; and a processor 403, where the transceiver 401 may be a receiver. As shown in FIG. 4, the processor 403 may be configured to: after the transceiver 401 receives a trigger signal, determine an antenna connected when the detected apparatus sends the trigger signal, then the collection antenna 402 receives a detection signal sent by the detected apparatus by using the connected antenna, and the processor 403 calibrates the array antenna based on the received detection signal.

The processor 403 may be a general-purpose central processing unit, a microprocessor, an application-specific integrated circuit, or one or more integrated circuits, configured to perform related operations to implement the technical solution according to this aspect of this application. In addition, the detection apparatus 202 may further include a memory. The memory may be configured to store code for execution of the processor 403, to implement the method performed by the detection apparatus 202 in this aspect of this application.

Based on the foregoing structure, in the detection apparatus 202, after the transceiver 401 receives the trigger signal sent by the detected apparatus, the collection antenna 402 receives the detection signal sent by the detected apparatus by using an antenna, so that the processor 403 implements fast calibration on the antenna in the array antenna based on the detection signal sent by the detected apparatus.

It should be noted that, although only the transceiver 401, the collection antenna 402, and the processor 403 are shown in the detection apparatus 202 shown in FIG. 4, a person skilled in the art should understand that, in a specific implementation process, the detection apparatus 202 further includes another device required for implementing normal operation. In addition, according to a specific requirement, a person skilled in the art should understand that the detection apparatus 202 may further include hardware components for implementing other additional functions. In addition, a person skilled in the art should understand that the detection apparatus 202 may include only components or modules essential for implementing this aspect of this application, but not necessarily include all the components shown in FIG. 4. A person of ordinary skill in the art may understand that all or some of the processes of the methods in the aspects may be implemented by a computer program instructing relevant hardware. The program may be stored in a computer readable storage medium. When the program runs, the processes of the methods in the aspects are performed. The foregoing storage medium may include: a magnetic disk, an optical disc, a read-only memory, a random access memory, or the like.

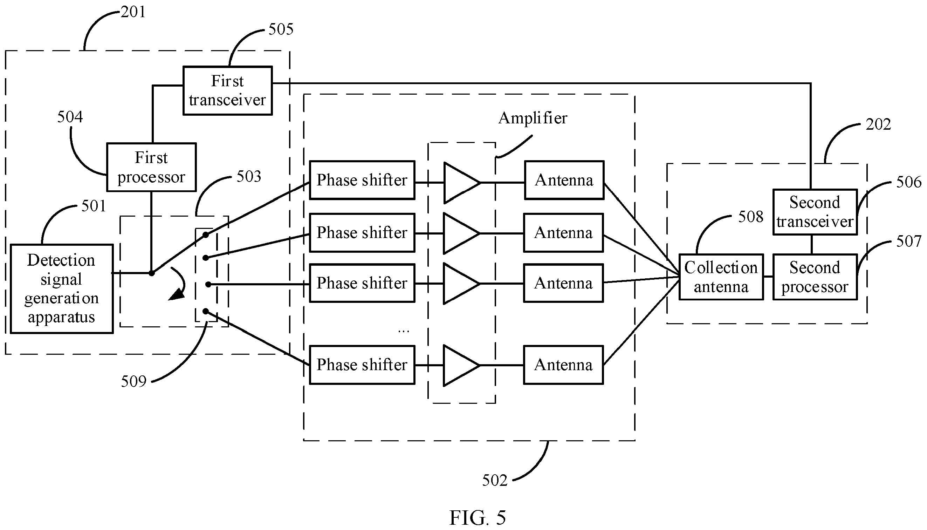

Referring to FIG. 5, in a possible structure of a first system for calibrating an array antenna according to an aspect of this application, the detected apparatus 201 controls, by using a first processor 504, a channel switch 503 to switch a connected antenna in a to-be-detected array antenna 502, so that a detection signal sent by a detection signal generation apparatus 501 is sent to the detection apparatus 202 by using the connected antenna: when connecting antennas in the array antenna 502 in a switchable manner, the detected apparatus 201 controls, by using the first processor 504, a first transceiver 505 to send a trigger signal to a second transceiver 506 of the detection apparatus 202; after the second transceiver 506 receives the trigger signal, the detection apparatus 202 determines, by using a second processor 507, the antenna connected when the detected apparatus 201 sends the trigger signal, and receives the detection signal by using a collection antenna 508; and the second processor 507 in the detection apparatus 202 calibrates the array antenna based on the detection signal received by the collection antenna 508. According to the detected apparatus 201 shown in FIG. 5, during the array antenna calibration, the channel switch 503 of the detected apparatus 201 may be connected to an input end 509 of the to-be-detected array antenna 502, and the array antenna is calibrated by using the calibration method according to this aspect of this application.

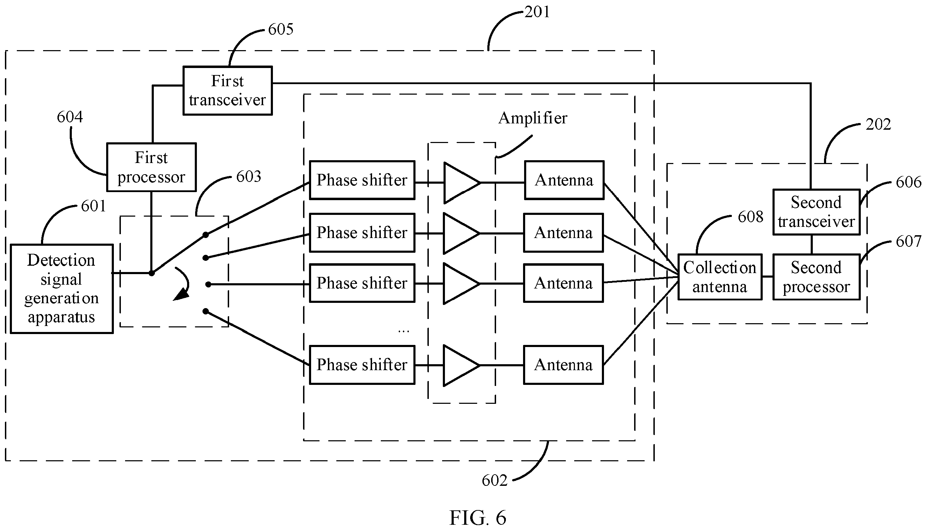

In addition, in an implementation, the detected apparatus 201 may include an array antenna. A structure of the detected apparatus 201 in this aspect of this application is shown in FIG. 6. The detected apparatus 201 controls, by using a first processor 604, a channel switch 603 to switch a connected antenna in the array antenna 602 of the detected apparatus 201, so that a detection signal sent by a detection signal generation apparatus 601 is sent to the detection apparatus 202 by using the connected antenna: when connecting antennas in the array antenna 602 in a switchable manner, the detected apparatus 201 controls, by using the first processor 604, a first transceiver 605 to send a trigger signal to a second transceiver 606 of the detection apparatus 202; after the second transceiver 606 receives the trigger signal, the detection apparatus 202 determines, by using a second processor 607, an antenna connected when the detected apparatus 201 sends the trigger signal, and receives, by using a collection antenna 608, the detection signal sent by the array antenna 602 of the detected apparatus 201; and the second processor 607 in the detection apparatus 202 calibrates the array antenna based on the detection signal received by the collection antenna 608. According to the detected apparatus 201 shown in FIG. 6, during the array antenna calibration, the array antenna in the detected apparatus 201 may be directly calibrated without a need of detaching the array antenna.

In the present invention, the detected apparatus 201 connects to different antennas in the array antenna at different moments in a preset sequence. Correspondingly, the detection apparatus 202 determines, in the preset sequence, an antenna connected when the detected apparatus 201 sends a trigger signal, where the preset sequence is a sequence in which the detected apparatus separately connects to different antennas in the array antenna.

For example, the detected apparatus controls, at different moments in a predetermined sequence, the channel switch to separately connect to an array antenna A, an antenna B, and an antenna C in the array antenna. When separately connecting to the antenna A, the antenna B, and the antenna C, the detected apparatus sends a trigger signal to the detection apparatus. Because the detected apparatus separately connects to the antenna A, the antenna B, and the antenna C in the preset sequence and the detection apparatus can determine, in the preset sequence, a sequence in which the detected apparatus connects to the antenna A, the antenna B, and the antenna C, trigger signals sent when the detected apparatus connects to the antenna A, the antenna B, and the antenna C may be a same trigger signal. In this way, after receiving the trigger signal for a first time, the detection apparatus can determine that an antenna connected when the detected apparatus sends the trigger signal is the antenna A; after receiving the trigger signal for a second time, the detection apparatus can determine that an antenna connected when the detected apparatus sends the trigger signal is the antenna B; and after receiving the trigger signal for a third time, the detection apparatus can determine that an antenna connected when the detected apparatus sends the trigger signal is the antenna C.

When the array antenna is calibrated by using the foregoing implementation, the detected apparatus does not need to generate different trigger signals for different connected antennas and does not need to send the different trigger signals to the detection apparatus. Therefore, a trigger signal sending process can be further simplified.

Optionally, in a period between a moment at which the detection apparatus 202 receives the trigger signal for an $n^{th}$ time and a moment at which the detection apparatus 202 receives the trigger signal for an $(n+1)^{th}$ time, the detection apparatus 202 may determine that the detected apparatus connects to an $(MOD (n, N))^{th}$ antenna in the array antenna in the preset sequence, where N is a total quantity of antennas in the array antenna, n and N are positive integers, and MOD (n, N) indicates that a modulo operation is performed on a value obtained by dividing n by N.

For example, the array antenna includes an antenna A, an antenna B, and an antenna C (that is, a total quantity N of antennas in the array antenna is 3), and the detected apparatus switches to connect to the antenna A, the antenna B, and the antenna C in a preset sequence of the antenna A, the antenna B, and the antenna C. If the transceiver of the detection apparatus receives, for a second time (that is, n = 2), a trigger signal sent by the detected apparatus, MOD (n, N) = 2. In this case, the processor of the detection apparatus determines that the detected apparatus currently connects a second antenna in the preset sequence, that is, the antenna B. In addition, it is assumed that the detected apparatus uses the antenna A, the antenna B, and the antenna C as a switching cycle, and the detected apparatus switches the antennas in a multi-period manner in the foregoing preset sequence. If the transceiver of the detection apparatus receives, for a fifth time (that is, n = 5), the trigger signal sent by the detected apparatus, MOD (n, N) = 2. In this case, the processor of the detection apparatus further determines that an antenna currently connected by the detected apparatus is the second antenna in the preset sequence, that is, the antenna B.

When the array antenna is calibrated by using the foregoing system for calibrating an array antenna according to the present invention, the detected apparatus 201 can separately send, in the preset sequence, detection signals in at least one switching cycle (one switching cycle is a cycle in which the detected apparatus separately connects all the antennas in the array antenna in the preset sequence) by using all the antennas in the array antenna, so that the array antenna can be calibrated in at least one switching cycle. If the detected apparatus separately sends, in the preset sequence, detection signals by using all the antennas in the array antenna within at least two switching cycles, the detection apparatus can receive at least two detection signals for a same antenna. In this way, an average value of the received detection signals for the antenna can be determined based on the at least two detection signals, so that the array antenna can be calibrated more accurately based on the average value of the detection signals.

In a possible implementation not claimed in the present application, the trigger signal sent by the detected apparatus 201 to the detection apparatus may further include information used to indicate an antenna connected when the detected apparatus sends the trigger signal. For example, the detected apparatus sends, to the detection apparatus, a trigger signal including number information of an antenna connected after antenna switching. Correspondingly, the detection apparatus 202 may determine, based on information about a currently connected antenna indicated by a trigger signal, an antenna connected when the detected apparatus sends the trigger signal. For example, the processor of the detection apparatus may determine, based on antenna number information included in a trigger signal, an antenna connected when the detected apparatus sends the trigger signal. When a trigger signal is set by using the foregoing method, even though the detected apparatus does not switch a connected antenna in the preset sequence, the detection apparatus can still determine an antenna currently connected by the detected apparatus after receiving the trigger signal.

For example, when the processor of the detected apparatus controls the channel switch to connect to the antenna A in the array antenna, a detection signal is sent to the detection apparatus through the antenna A, and the processor of the detected apparatus controls the transceiver to send a trigger signal to the detection apparatus, where the sent trigger signal may include antenna number information of the antenna A, so that the processor of the detection apparatus determines, based on the information that is about the antenna A and that is included in the trigger signal, that an antenna connected after the detected apparatus switches an antenna is the antenna A.

Certainly, the foregoing description is merely an example, and the detected apparatus in this aspect of this application is not limited to sending the trigger signal in the foregoing example to the detection apparatus. For example, the detected apparatus may further determine, according to a preset correspondence between antennas and trigger signals, a trigger signal corresponding to an antenna connected after the antenna switching, and send the corresponding trigger signal to the detection apparatus, so that the detection apparatus determines, according to the preset correspondence between antennas and trigger signals, an antenna corresponding to the received trigger signal as an antenna currently connected by the detected apparatus.

In a possible implementation, in a period between a moment at which the detection apparatus 202 receives the trigger signal for an $n^{th}$ time and a moment at which the detection apparatus 202 receives the trigger signal for an $(n+1)^{th}$ time, the detection apparatus 202 in this aspect of this application may receive a detection signal sent by an antenna determined based on the trigger signal received for the $n^{th}$ time, where n is a positive integer.

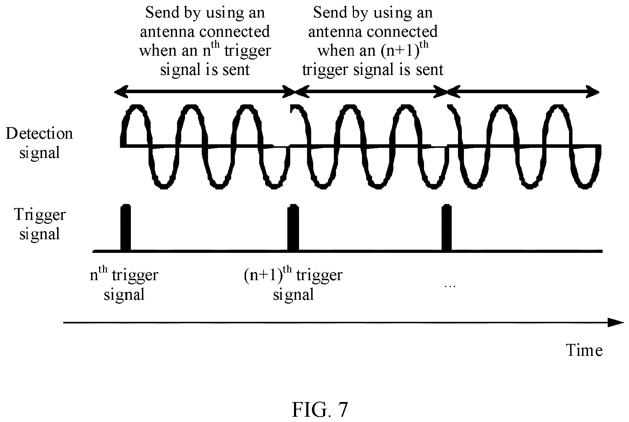

In this aspect of this application, the detected apparatus sends a trigger signal (for example, the trigger signal is a rising edge) to the detection apparatus when connecting to an antenna, and the detected apparatus sends a detection signal to the detection apparatus by using the connected antenna (for example, the detection signal is a sine wave signal); therefore, in this aspect of this application, the trigger signal and the detection signal sent by the detected apparatus to the detection apparatus are indicated in a same timeline, so that a schematic signal diagram shown in FIG. 7 can be obtained. In a period between a moment at which the detected apparatus sends the trigger signal for an $n^{th}$ time and a moment at which the detected apparatus sends the trigger signal for an $(n+1)^{th}$ time, the detected apparatus sends the detection signal by using the antenna connected when the trigger signal is sent for the $n^{th}$ time. Therefore, in a period between a moment at which the detection apparatus receives an $n^{th}$ trigger signal and a moment at which the detection apparatus receives an $(n+1)^{th}$ trigger signal, the detection apparatus receives the detection signal sent by the connected antenna determined based on the trigger signal received for the $n^{th}$ time, where n is a positive integer.

For example, if the array antenna includes the antenna A, the antenna B, and the antenna C, after the transceiver of the detection apparatus receives a second trigger signal, if the processor of the detection apparatus determines that an antenna connected when the detected apparatus sends the trigger signal is the antenna B, the detection apparatus receives, by using the collection antenna in a period between a moment at which the detection apparatus receives the second trigger signal and a moment at which the detection apparatus receives a third trigger signal, a detection signal sent by the detected apparatus by using the antenna B.

In this aspect of this application, the processor of the detection apparatus can calibrate the array antenna based on detection signals sent by different connected antennas. The method in which the detection apparatus calibrates the array antenna based on received detection signals sent by the detected apparatus by using different connected antennas is not specifically limited in this aspect of this application. The detection apparatus 202 may calibrate the array antenna by using the following method: first, the detection apparatus determines, based on received detection signals sent by the detected apparatus by using different antennas, signal parameters of the detection signals separately sent by the different antennas in the array antenna; second, the detection apparatus determines a signal error of the signal parameters between the different antennas based on the signal parameters of the different antennas; and finally, the detection apparatus calibrates the antenna in the array antenna based on the signal error of the signal parameters between the different antennas, where the signal parameter may be but is not limited to a signal amplitude and/or a signal phase.

For example, after determining detection signals sent by all the antennas, the detection apparatus may determine signal parameters of the detection signals of all the antennas, then compare signal amplitude differences and/or signal phase differences between the signal parameters of every two antennas (for example, perform division between signal amplitude differences of the signal parameters of every two antennas, or perform subtraction between the signal phases differences of the signal parameters of every two antennas), and finally, calibrate the array antenna based on a determined signal amplitude difference and/or a determined signal phase difference. Certainly, one of the antennas may also be selected as a reference antenna, and a signal parameter of each of the other antennas is compared with a signal parameter of the reference antenna to separately determine a signal amplitude difference and/or a signal phase difference between another antenna and the reference antenna, and the array antenna is calibrated based on the determined signal amplitude difference and/or the determined signal phase difference.

In this aspect of this application, the reference antenna may be an antenna close to a position of an array center of the array antenna, to reduce a signal parameter error caused when the antenna is far away from the position of the array center, and improve array antenna calibration precision. The detection apparatus may receive, based on the following method, a detection signal sent by the detected apparatus by using the reference antenna: assuming that an antenna located at the center of the array of the array antenna is the reference antenna and the reference antenna is an $m^{th}$ antenna connected by the detected apparatus in a preset sequence, the detection apparatus uses a received detection signal sent by the $m^{th}$ antenna as the detection signal sent by the reference antenna, where m is a positive integer. Alternatively, the detected apparatus sends, to the detection apparatus, a trigger signal including information about the reference antenna (the information about the reference antenna may be a number of the reference antenna, or indicates a specific identifier used for the reference antenna), and after the detection apparatus receives the trigger signal, the detection apparatus receives a detection signal sent by the detected apparatus by using the reference antenna.

In this aspect of this application, the reference antenna may be an antenna that sends a detection signal having a maximum signal-to-noise ratio (that is, a maximum signal power) among detection signals sent by antennas in the array antenna, to improve accuracy of signal parameters of the determined reference antenna and another antenna and improve array antenna calibration precision. The detection apparatus may receive, based on the following method, a detection signal sent by the detected apparatus by using the reference antenna: receiving, by the detection apparatus, detection signals separately sent by the detected apparatus by using all antennas in the array antenna, determining a detection signal among the detection signals that has a maximum signal-to-noise ratio, that is, a maximum signal power, and using the detection signal as the received detection signal sent by the detected apparatus by using the reference antenna.

By using an example in which a detection signal is a sine wave, the following describes the method for determining a carrier frequency and determining a signal amplitude and a signal phase based on the carrier frequency in this aspect of this application.

1) Determine a carrier frequency based on a detection signal

The detection apparatus performs sampling based on a received detection signal sent by an antenna, to obtain the following sampling sequence x(n) of the detection signal:

$$x(n)=C\cos(2\pi f n t_s + \varphi)+d+\upsilon(n) \quad \text{(Formula 1)},$$

where
C is an amplitude of a sine wave detection signal, f is a frequency of a sine wave, $t_s$ is a sampling time interval, $\varphi$ is an initial phase of the sine wave, $d$ is a direct current of the sine wave, $\upsilon$ is noise generated when the collection antenna of the detection apparatus receives a signal, $n$ is a sampling point sequence number and has a value within [0, N], and N is a total quantity of sampling points in one sampling.

Based on the sampling sequence x(n), a carrier frequency f of the antenna may be indicated by the following formula:

$$\hat{f} = [k_0 + \frac{1}{2} \operatorname{Re}(\frac{X_{k_0+0.5} + X_{k_0-0.5}}{X_{k_0+0.5} - X_{k_0-0.5}})] \frac{f_s}{N} \quad \text{(Formula 2)},$$

where

f is the carrier frequency, $f_s$ is sampling frequency, X(k) is an expression obtained after fast Fourier transform (FFT, Fast Fourier Transform) is performed on the sampling sequence x(n), $k_0$ is a k value that maximizes a modulus value $|X(k)|$ of X, k is a sequence number of the Fourier transform x(k) of the sequence x(n), $X_{k_0+0.5}$ may be indicated by using Formula 3, and $X_{k_0-0.5}$ may be indicated by using Formula 4:

$$X_{k_0+0.5} = \sum_{n=0}^{N-1} x(n) \exp(-j2\pi \frac{k_0+0.5}{N} n) \quad \text{(Formula 3)}$$

$$X_{k_0-0.5} = \sum_{n=0}^{N-1} x(n) \exp(-j2\pi \frac{k_0-0.5}{N} n) \quad \text{(Formula 4)}$$

2) Determine a signal amplitude and a signal phase based on the carrier frequency

The sampling sequence x(n) indicated by Formula 1 is equivalently transformed into the following formula:

$$x(n) = A\cos(2\pi f n t_s) + B\sin(2\pi f n t_s) + d + \upsilon(n) \quad \text{(Formula 5)},$$

where

$$A = C\cos\varphi, \quad B = -C\sin\varphi,$$

and f is substituted by the previously determined carrier frequency f.
The following matrix is constructed according to Formula 5:

$$\Psi = \begin{bmatrix} \cos(2\pi f t_s) & \sin(2\pi f t_s) & 1 \\ \cos(2\pi f 2 t_s) & \sin(2\pi f 2 t_s) & 1 \\ \ldots & \ldots & \ldots \\ \cos(2\pi f N t_s) & \sin(2\pi f N t_s) & 1 \end{bmatrix}, \quad X = \begin{bmatrix} x(1) \\ x(2) \\ \ldots \\ x(N) \end{bmatrix}, \text{ and } R = \begin{bmatrix} A \\ B \\ d \end{bmatrix},$$

where X is a vector expression of the sampling sequence x(n), R is a vector expression of parameters A, B, and d to be estimated, $\hat{R}$ is obtained by performing parameter estimation based on the foregoing matrix, and $\hat{R}$ is an estimated value of R:

$$\hat{R} = (\Psi^T \Psi)^{-1} (\Psi^T X) \quad \text{(Formula 6)},$$

where $\psi^T$ is transposition of a matrix $\psi$;
A value of A and a value of B are estimated according to Formula 6, and a signal amplitude $\hat{C}$ is determined according to the following formula:

$$\hat{C} = \sqrt{A^2 + B^2} \qquad \text{(Formula 7)}$$

Determine a signal phase $\hat{\varphi}$ according to the following formula:

$$\hat{\varphi} = \begin{cases} \operatorname{atan} \dfrac{-B}{A}, & A \geq 0 \\ \operatorname{atan} \dfrac{-B}{A} + \pi, & A < 0 \end{cases} \qquad \text{(Formula 8)}$$

In the present invention, the processor of the detection apparatus 202 calibrates the array antenna by using the following method: determining, by the detection apparatus, a carrier frequency of a reference antenna based on a received detection signal sent by the reference antenna, where the reference antenna is any antenna in the array antenna; determining, by the detection apparatus, a signal parameter of the reference antenna based on the carrier frequency of the reference antenna, and determining a signal parameter of another antenna based on the carrier frequency of the reference antenna and a received detection signal sent by the another antenna, where the another antenna is any antenna in the array antenna except the reference antenna; and calibrating, by the detection apparatus, the array antenna based on the signal parameter of the reference antenna and the signal parameter of the another antenna.

Because errors generated when carrier frequencies of different antennas are determined based on detection signals of the different antennas are different, if a signal parameter of each of different antennas is determined based on a carrier frequency of the different antenna, errors between the carrier frequencies of the different antennas cannot be completely removed through calculation during signal calibration. For example, an error of a carrier frequency of the antenna A determined based on a detection signal of the antenna A is x1, an error of a carrier frequency of the antenna B determined based on a detection signal of the antenna B is x2, and x1 is not equal to x2; when a signal error between the antenna A and the antenna B is determined, an error between x1 and x2 cannot be completely removed by using a calculation method such as subtraction of the signal parameter of the antenna B from the signal parameter of the antenna A (that is, an error related to x1 and x2 still exists after the subtraction), which leads to a relatively large error in an antenna calibration result. However, in the foregoing method in this aspect of this application, the carrier frequency of the reference antenna is used in both the process of determining the signal parameter of the reference antenna and the process of determining the signal parameter of the another antenna; therefore, when the signal error between the signal parameter of the reference antenna and the signal parameter of the another antenna is determined, an error generated when a carrier frequency of an antenna is determined can be eliminated (for example, the signal parameter of the antenna B is subtracted from the signal parameter of the antenna A to obtain a parameter difference, where an error of the carrier frequency of the reference antenna is canceled by using a subtraction method), so that a calibration result obtained when the array antenna is calibrated based on the signal error is more accurate.

For example, when the signal amplitude and the signal phase of the reference antenna and the signal amplitude and the signal phase of the another antenna are determined by using Formula 1 to Formula 8 provided in this aspect of this application, a frequency f in Formula 5 is replaced by the carrier frequency $\hat{f}_0$ of the reference antenna, to determine the signal amplitude and the signal phase of the reference antenna and the signal amplitude and the signal phase of the another antenna and further determine an amplitude error and a phase error. Because in the process of determining the amplitude error and the phase error, introduction of the carrier frequency of the reference antenna and the carrier frequency of the another antenna is avoided, a problem that an error between the two carrier frequencies cannot be canceled is avoided, therefore, a more accurate calibration result can be obtained when the array antenna is calibrated based on the amplitude error and the phase error.

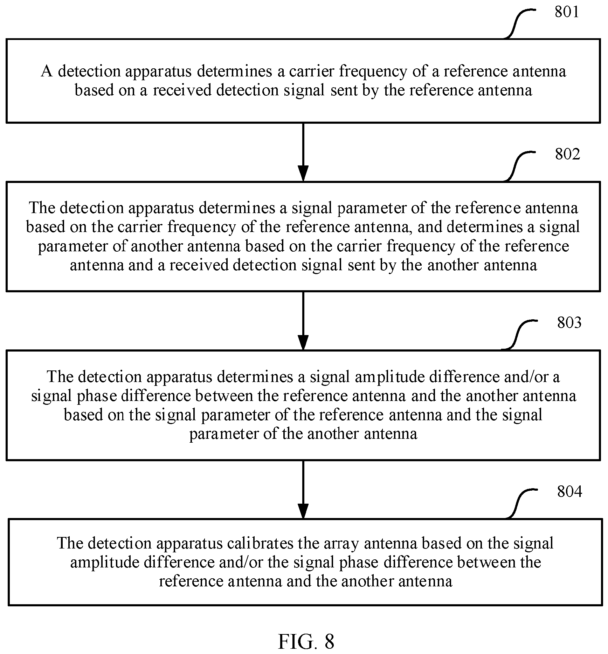

As shown in FIG. 8, a method in which a detection apparatus calibrates an array antenna based on received detection signals sent by different connected antennas according to an aspect of this application includes the following steps.

Step 801: The detection apparatus determines a carrier frequency of a reference antenna based on a received detection signal sent by the reference antenna.

Step 802: The detection apparatus determines a signal parameter of the reference antenna based on the carrier frequency of the reference antenna, and determines a signal parameter of another antenna based on the carrier frequency of the reference antenna and a received detection signal sent by the another antenna.

Step 803: The detection apparatus determines a signal amplitude difference and/or a signal phase difference between the reference antenna and the another antenna based on the signal parameter of the reference antenna and the signal parameter of the another antenna.

Step 804: The detection apparatus calibrates the array antenna based on the signal amplitude difference and/or the signal phase difference between the reference antenna and the another antenna.

When the signal parameter of the reference antenna and the signal parameter of the another antenna are calculated by using the carrier frequency of the reference antenna, an impact of an error of the carrier frequency on a calculated signal error can be reduced when the signal error of the another antenna and the signal error of the reference antenna are calculated. Therefore, the array antenna can be calibrated more accurately by using the foregoing method.

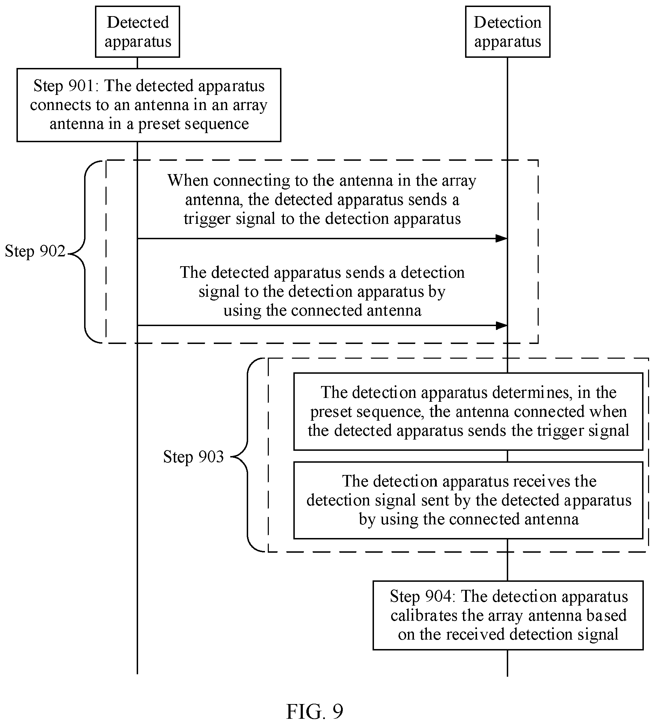

As shown in FIG. 9, a method for calibrating an array antenna by using the system for calibrating an array antenna shown in FIG. 2 includes the following steps.

Step 901: A detected apparatus connects to an antenna in the array antenna in a preset sequence.

Step 902: The detected apparatus sends a trigger signal to a detection apparatus when connecting to the antenna in the array antenna, where the trigger signal includes information indicating that the detected apparatus switches the connected antenna, and the detected apparatus sends a detection signal to the detection apparatus by using the connected antenna.

Step 903: After receiving the trigger signal, the detection apparatus determines, in the preset sequence, the antenna connected when the detected apparatus sends the trigger signal, and receives the detection signal sent by the detected apparatus by using the connected antenna.

Step 904: The detection apparatus calibrates the array antenna based on the received detection signal.

The detected apparatus may preset a switching sequence of all the antennas in the array antenna. When array antenna calibration is performed, the detected apparatus separately connects to each of the antennas in the array antenna according to step 901 and in the preset sequence; and the detected apparatus sends, according to step 902, a trigger signal to the detection apparatus when connecting to an antenna each time, and sends a detection signal to the detection apparatus by using each of the antennas in the array antenna. The detection apparatus separately receives, according to step 903, the detection signal sent by the detected apparatus by using each of the antennas in the array antenna, and calibrates, according to step 904, all the antennas in the array antenna based on the received detection signals sent by all the antennas.

By using the foregoing method, the detected apparatus switches a connected antenna in the array antenna in the preset sequence, sends a detection signal to the detection apparatus by using the connected antenna, and sends a trigger signal to the detection apparatus each time the detected apparatus connects to an antenna; after receiving the trigger signal, the detection apparatus can determine, in the preset sequence, a transmit antenna corresponding to the received detection signal, so that the detection apparatus can calibrate the array antenna based on received detection signals of different antennas. In this way, a collection channel does not need to be constructed at an input port of each antenna in the array antenna in an array antenna calibration process; therefore, array antenna calibration complexity can be decreased, thereby improving array antenna calibration efficiency.

When the array antenna is calibrated by using the system for calibrating an array antenna according to this aspect of this application and using the method for calibrating an array antenna shown in FIG. 9, selected parameters may include but are not limited to parameters shown in the following Table 1.

**Table 1**

| Frequency of transmitting a monophonic signal | 100 MHz (megahertz) |
|---|---|
| Phase noise in transmitting a monophonic signal | -100 dBc/Hz@100 KHz (phase noise at the time of deviation from the frequency 100 kilohertz) |
| Sampling frequency | 800 MHz |
| Connection duration of a single channel | 62.5 ns (nanosecond) |
| Signal-to-noise ratio of a carrier | 10 dB (decibel) |

It can be learned that when an array antenna having 256 channels (that is, a quantity of antennas is 256) by using the parameters shown in Table 1 and the method for calibrating an array antenna shown in FIG. 9, theoretically, phase calibration precision of the array antenna, lower than 3.72 degrees, can be obtained, a connection duration of a single channel is only 62.5 ns, and a time required for performing phase calibration on all antennas in the array antenna is only 16 microseconds. Therefore, high-precision fast calibration on the array antenna can be implemented.

The method described with reference to FIG. 10 is not claimed in the present application.

As shown in FIG. 10, another method for calibrating an array antenna by using a first system for calibrating an array antenna according to an aspect of this aspect includes the following steps.

Step 1001: A detected apparatus connects to an antenna in the array antenna.

Step 1002: The detected apparatus sends a trigger signal to a detection apparatus when connecting to the antenna in the array antenna, where the trigger signal includes information indicating that the detected apparatus switches the connected antenna and information used to indicate the antenna connected when the detected apparatus sends the trigger signal, and the detected apparatus sends a detection signal to the detection apparatus by using the connected antenna.

Step 1003: After receiving the trigger signal, the detection apparatus determines, based on information about a currently connected antenna indicated by the trigger signal, the antenna connected when the detected apparatus sends the trigger signal, and receives the detection signal sent by the detected apparatus by using the connected antenna.

Step 1004: The detection apparatus calibrates the array antenna based on the received detection signal.

When the array antenna is calibrated, the detected apparatus may separately connect, according to step 1001, to each of antennas in the array antenna, send, according to step 1002, a trigger signal including information about a currently connected antenna to the detection apparatus each time the detected apparatus connects to the antenna, and send a detection signal to the detection apparatus by using each of the antennas in the array antenna. The detection apparatus separately receives, according to step 1003, the detection signal sent by the detected apparatus by using each of the array antennas in the array antenna, and calibrates, according to step 1004, all the antennas in the array antenna based on the received detection signals sent by all the antennas.

By using the foregoing method, the detected apparatus switches a connected antenna in the array antenna, sends a detection signal to the detection apparatus by using the connected antenna, and sends, to the detection apparatus each time the detected apparatus connects to the antenna, a trigger signal including information used to indicate the antenna connected when the detected apparatus sends the trigger signal. The detection apparatus can determine, based on an indication of the trigger signal, a transmit antenna corresponding to the received detection signal, so that the detection apparatus can calibrate the array antenna based on received detection signals of different antennas. In this way, a collection channel does not need to be constructed at an input port of each antenna in the array antenna in an array antenna calibration process; therefore, array antenna calibration complexity can be decreased, thereby improving array antenna calibration efficiency.

Based on a same inventive concept as the first system for calibrating an array antenna according to this aspect of this application, an aspect of this application further provides a second system for calibrating an array antenna. For implementation of the system, refer to the implementation of the first system for calibrating an array antenna according to this aspect of this application. The second system and the corresponding method as described in conjunction with FIGS. 11 to 17 are not part of the claimed invention.

As shown in FIG. 11, this aspect of this application provides the second system for calibrating an array antenna, including:

a detected apparatus 1101, configured to receive a notification message sent by a detection apparatus, where the notification message includes information about an antenna that the detected apparatus is to connect to; and connect to the antenna based on the notification message, and send a detection signal by using the connected antenna; and the detection apparatus 1102, configured to send the notification message to the detected apparatus; after sending the notification message, receive a detection signal sent by using the corresponding antenna in the array antenna that the detected apparatus connects to; and calibrate the array antenna based on the received detection signal.

In the foregoing system, the detected apparatus 1101 connects to the antenna in the array antenna based on the notification message sent by the detection apparatus 1102, and sends the detection signal by using the connected antenna, where the notification message includes the information about the antenna that the detected apparatus 1101 is to connect to. After sending the notification message to the detected apparatus 1101, the detection apparatus 1102 receives the detection signal sent by the detected apparatus 1101 by using the corresponding connected antenna in the array antenna. Because the detection apparatus can calibrate the array antenna based on the received detection signal, a collection channel does not need to be constructed at an input port of each antenna in the array antenna in an array antenna calibration process; therefore, array antenna calibration efficiency is improved, and array antenna calibration complexity is decreased, thereby improving array antenna calibration efficiency.

In this aspect of this application, the detection apparatus 1102 sends a notification message to the detected apparatus 1101, and the detected apparatus 1101 connects to a corresponding antenna in the array antenna based on the notification message. For example, the array antenna includes an antenna A, an antenna B, and an antenna C, and the detection apparatus 1102 sends a notification message including information about the antenna A to the detected apparatus 1101; in this case, after receiving the notification message, the detected apparatus 1101 connects to the antenna A of the array antenna based on the information about the antenna A in the notification message, and sends a detection signal by using the antenna A. The detection apparatus 1102 may control, by using a processor, a transceiver to send the notification message to the detected apparatus 1101, where the transceiver may be a wired or wireless transceiver, for example, an SMJ connector, an SMA connector, a bayonet nut connector, a nut connector, and other coaxial cable interfaces or wireless transceivers. Correspondingly, the detection apparatus 1102 receives a trigger signal by using the corresponding transceiver.

After receiving the notification message sent by the detection apparatus 1102, the detected apparatus 1101 may connect, by using a channel switch, the antenna indicated by the information about the antenna in the notification message, where the channel switch may be a single-pole multi-throw switch or the like, and the detected apparatus 1101 may control, by using a processor, the channel switch to switch a connected antenna. In addition, the detected apparatus 1101 sends the detection signal to the detection apparatus by using the connected antenna, where the detection signal may be a detection signal sent by a detection signal generation apparatus. For example, the detection signal generation apparatus may be a sine wave generator, and the detection signal may be a sine wave signal generated by the sine wave generator.

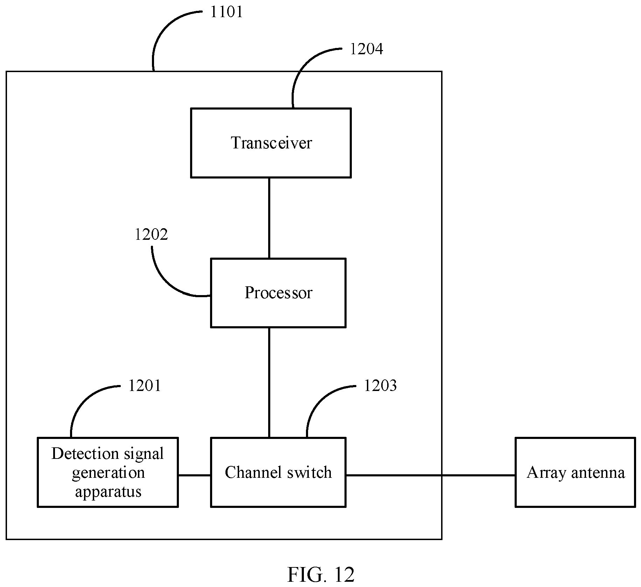

Based on the system for calibrating an array antenna shown in FIG. 11, an aspect of this application provides a detected apparatus for calibrating an array antenna. As shown in FIG. 12, in a possible structure of a detected apparatus 1101 in this aspect of this application, the detected apparatus 1101 includes: a detection signal generation apparatus 1201, configured to generate a detection signal; a processor 1202; a channel switch 1203, configured to connect to an antenna in the array antenna; and a transceiver 1204, used for communication between the detected apparatus and a detection apparatus, where the transceiver 1204 may be a receiver. As shown in FIG. 12, the detected apparatus 1101 may be configured to receive a notification message by using the transceiver 1204, where the notification message includes information indicating an antenna that the detected apparatus is to connect to; the processor 1202 of the detected apparatus 1101 controls, based on the information about the antenna in the notification message, the channel switch 1203 to connect to the antenna in the array antenna, so that a detection signal is sent to the detection apparatus by using the connected antenna, where the detection signal may be generated by the detection signal generation apparatus 1201.

The processor 1202 may be a general-purpose central processing unit, a microprocessor, an application-specific integrated circuit, or one or more integrated circuits, configured to perform related operations to implement the technical solution according to this aspect of this application. In addition, the detected apparatus 1101 may further include a memory. The memory may be configured to store code for execution of the processor 1202, to implement the method performed by the detected apparatus 1101 in this aspect of this application.

Based on the foregoing structure, after the transceiver 1204 in the detected apparatus 1101 receives the notification message sent by the detection apparatus, the processor 1202 controls, based on the information, about the antenna that the detected apparatus is to connect to, in the notification message, the channel switch 1203 to connect to the antenna in the array antenna, so that the detection signal is sent to the detection apparatus by using the connected antenna, and the detection apparatus receives the detection signal sent by using the antenna indicated in the notification message and performs fast calibration on the array antenna based on the received detection signal.

It should be noted that, although only the detection signal generation apparatus 1201, the processor 1202, the channel switch 1203, and the transceiver 1204 are shown in the detected apparatus 1101 shown in FIG. 12, a person skilled in the art should understand that, in a specific implementation process, the detected apparatus 1101 further includes another device required for implementing normal operation. In addition, according to a specific requirement, a person skilled in the art should understand that the detected apparatus 1101 may further include hardware components for implementing other additional functions. In addition, a person skilled in the art should understand that the detected apparatus 1101 may include only components or modules essential for implementing this aspect of this application, but not necessarily include all the components shown in FIG. 12. A person of ordinary skill in the art may understand that all or some of the processes of the methods in the aspects may be implemented by a computer program instructing relevant hardware. The program may be stored in a computer readable storage medium. When the program runs, the processes of the methods in the aspects are performed. The foregoing storage medium may include: a magnetic disk, an optical disc, a read-only memory, a random access memory, or the like.

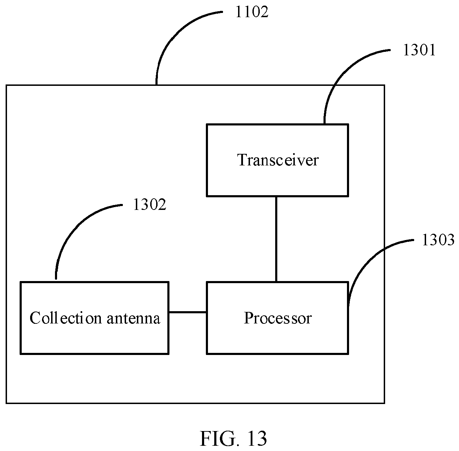

Based on the system for calibrating an array antenna shown in FIG. 11, an aspect of this application provides a detection apparatus for calibrating an array antenna. As shown in FIG. 13, in a possible structure of a detection apparatus 1102 in this aspect of this application, the detection apparatus 1102 includes: a transceiver 1301, used for communication between the detection apparatus 1102 and a detected apparatus; a collection antenna 1302, configured to receive a detection signal; and a processor 1303, where the transceiver 1301 may be a transmitter. As shown in FIG. 13, the processor 1303 may be configured to control the transceiver 1301 to send a trigger signal to the detected apparatus, where the trigger signal includes information indicating an antenna that the detected apparatus is to connect to. After sending the trigger signal to the detected apparatus by using the transceiver 1301, the detection apparatus 1102 receives, by using the collection antenna 1302, a detection signal sent by the detected apparatus by using the corresponding antenna connected based on the notification message, and calibrates the array antenna by using the processor 1303 based on the received detection signal.

The processor 1303 may be a general-purpose central processing unit, a microprocessor, an application-specific integrated circuit, or one or more integrated circuits, configured to perform related operations to implement the technical solution according to this aspect of this application. In addition, the detection apparatus 1102 may further include a memory. The memory may be configured to store code for execution of the processor 1303, to implement the method performed by the detection apparatus 1102 in this aspect of this application.

Based on the foregoing structure, after sending the trigger signal to the detected apparatus by using the transceiver 1301, the detection apparatus 1102 can receive, by using the collection antenna 1302, the detection signal sent by the detected apparatus using the antenna, where the detection signal received by the detection apparatus is sent by the detected apparatus by using the corresponding antenna connected based on the notification message, so that the processor 1303 of the detection apparatus 1102 can implement fast calibration on the antenna in the array antenna based on the detection signal sent by the detected apparatus.

It should be noted that, although only the transceiver 1301, the collection antenna 1302, and the processor 1303 are shown in the detection apparatus 1102 shown in FIG. 13, a person skilled in the art should understand that, in a specific implementation process, the detection apparatus 1102 further includes another device required for implementing normal operation. In addition, according to a specific requirement, a person skilled in the art should understand that the detection apparatus 1102 may further include hardware components for implementing other additional functions. In addition, a person skilled in the art should understand that the detection apparatus 1102 may include only components or modules essential for implementing this aspect of this application, but not necessarily include all the components shown in FIG. 13. A person of ordinary skill in the art may understand that all or some of the processes of the methods in the aspects may be implemented by a computer program instructing relevant hardware. The program may be stored in a computer readable storage medium. When the program runs, the processes of the methods in the aspects are performed. The foregoing storage medium may include: a magnetic disk, an optical disc, a read-only memory, a random access memory, or the like.

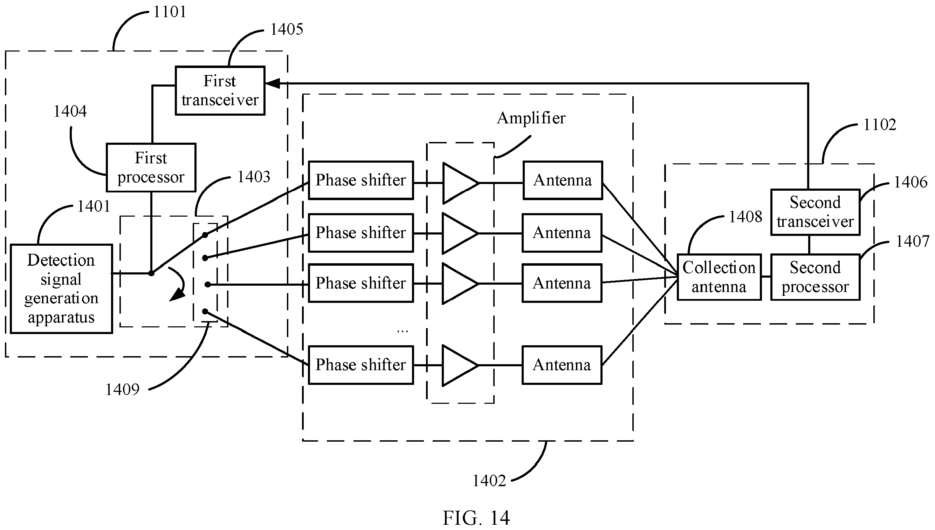

Referring to FIG. 14, in a possible structure of the second system for calibrating an array antenna according to an aspect of this application, the detection apparatus 1102 controls, by using a second processor 1407, a second transceiver 1406 to send a notification message to the detected apparatus 1101, where the notification message includes information about an antenna in the to-be-detected array antenna 1402 that the detected apparatus is to connect to. After receiving, by using a first transceiver 1405, the notification message sent by the detection apparatus 1102, the detected apparatus 1101 determines, by using a first processor 1404, the antenna corresponding to the information about the antenna in the notification message, and controls, by using the first processor 1404, a channel switch 1403 to switch the determined connected antenna, so that a detection signal sent by a detection signal generation apparatus 1401 is sent to the detection apparatus 1102 by using the connected antenna: after sending the notification message by using the second transceiver 1406, the detection apparatus 1102 receives the detection signal by using a collection antenna 1408; and the detection apparatus 1102 calibrates the array antenna based on the received detection signal by using the second processor 1407. According to the detected apparatus 1101 shown in FIG. 14, during the array antenna calibration, the channel switch 1403 of the detected apparatus 1101 may connect an input end 1409 of the to-be-detected array antenna 1402, and the array antenna is calibrated by using the calibration method according to this aspect of this application.

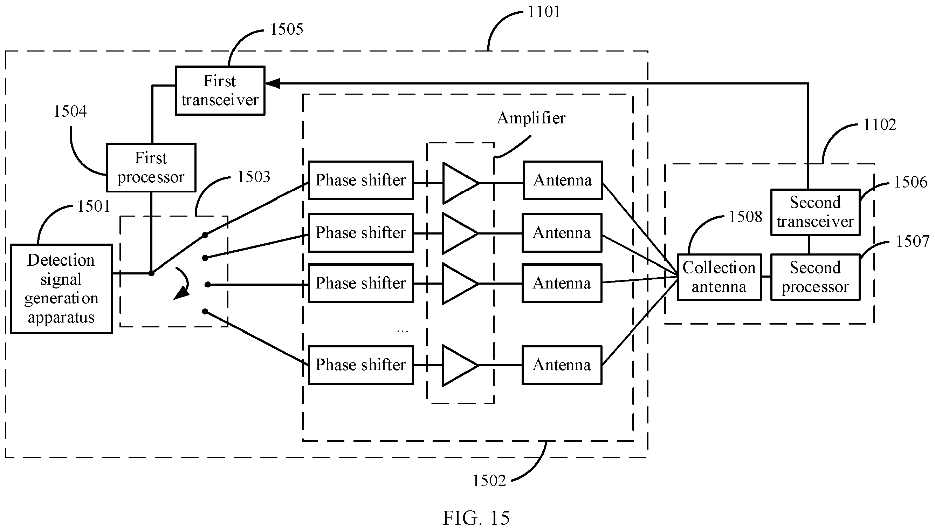

In addition, in another implementation, the detected apparatus 1101 may include an array antenna. A structure of the detected apparatus 1101 described in this aspect of this application is shown in FIG. 15. The detection apparatus 1102 controls, by using a second processor 1507, a second transceiver 1506 to send a notification message to the detected apparatus 1101, where the notification message includes information about an antenna in the array antenna 1502 that the detected apparatus is to connect to. After receiving, by using a first transceiver 1505, the notification message sent by the detection apparatus 1102, the detected apparatus 1101 determines, by using a first processor 1504, the antenna corresponding to the information about the antenna in the notification message, and controls, by using the first processor 1504, a channel switch 1503 to switch the determined connected antenna, so that a detection signal sent by a detection signal generation apparatus 1501 is sent to the detection apparatus 1102 by using the connected antenna: after sending the notification message by using the second transceiver 1506, the detection apparatus 1102 receives, by using a collection antenna 1508, the detection signal sent after the detected apparatus 1101 connects to the antenna based on the notification message; and the detection apparatus 1102 calibrates the array antenna by using the second processor 1507 based on the received detection signal. According to the detected apparatus 1101 shown in FIG. 15, during the array antenna calibration, the array antenna in the detected apparatus 1101 may be directly calibrated without a need of detaching the array antenna.

In a possible implementation, in a period between a moment at which the transceiver of the detection apparatus 1102 sends the notification message for an $n^{th}$ time and a moment at which the transceiver of the detection apparatus 1102 sends the notification message for an $(n+1)^{th}$ time, the processor of the detection apparatus 1102 may receive, by using the collection antenna, a detection signal sent by the detected apparatus by using the antenna corresponding to the notification message sent for the $n^{th}$ time, where n is a positive integer.

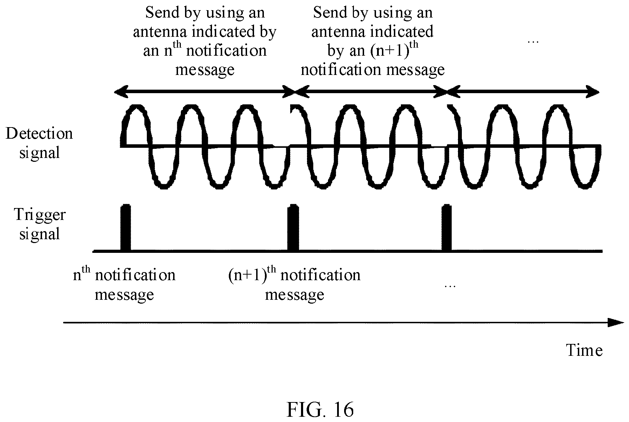

In this aspect of this application, after the detection apparatus sends the notification message to the detected apparatus, the detected apparatus connects to the corresponding antenna based on the information about the antenna in the notification message, and sends the detection signal by using the connected corresponding antenna (for example, the detection signal is a sine wave signal); the notification message sent by the detection apparatus to the detected apparatus and the detection signal sent by the detected apparatus to the detection apparatus in this aspect of this application are indicated in a same timeline, so that a schematic signal diagram shown in FIG. 16 can be obtained. In a period between a moment at which the detection apparatus sends the notification message for an $n^{th}$ time and a moment at which the detection apparatus sends the notification message for an $(n+1)^{th}$ time, the detected apparatus sends a detection signal by using an antenna indicated by a trigger signal received for the $n^{th}$ time. Therefore, in a period between a moment at which the detection apparatus sends an $n^{th}$ notification message to the detected apparatus and a moment at which the detection apparatus sends an $(n+1)^{th}$ notification message to the detected apparatus, the detection apparatus receives the detection signal sent by the antenna corresponding to information about the antenna in the $n^{th}$ notification message, where n is a positive integer. For example, in a period between a moment at which the detection apparatus sends the notification message for an $n^{th}$ time by using the transceiver and a moment at which the detection apparatus sends the notification message for an $(n+1)^{th}$ by using the transceiver, the detection apparatus receives, by using the collection antenna, a detection signal sent by an antenna corresponding to information about the antenna in a second notification message.

For a specific implementation in which the detection apparatus 1102 calibrates the array antenna after receiving the detection signal in this aspect of this application, refer to the implementation in which the detection apparatus 202 calibrates the array antenna in the first system for calibrating an array antenna. For brevity, repeated parts are not described in detail.

In a possible implementation, the calibrating, by the detection apparatus 1102, the array antenna based on the received detection signal includes: determining, by a processor of the detection apparatus 1102, a carrier frequency of a reference antenna based on a received detection signal sent by the reference antenna, where the reference antenna is any antenna among different connected antennas; determining, by the processor of the detection apparatus 1102, a signal parameter of the reference antenna based on the carrier frequency of the reference antenna, and determining a signal parameter of another antenna based on the carrier frequency of the reference antenna and a received detection signal sent by the another antenna, where the another antenna is any one of the different connected antennas except the reference antenna; and the processor of the detection apparatus 1102 calibrates the array antenna based on the signal parameter of the reference antenna and the signal parameter of the another antenna, where the signal parameter includes a signal carrier amplitude and/or a signal phase.

In this aspect of this application, the reference antenna may be an antenna close to a position of an array center of the array antenna, to reduce a signal parameter error caused when the antenna is far away from the position of the array center, and improve array antenna calibration precision. The detection apparatus may receive, based on the following method, a detection signal sent by the detected apparatus by using the reference antenna: sending, by the detection apparatus, a notification message including information about the reference antenna to the detected apparatus (the information about the reference antenna may be a number of the reference antenna); after receiving the notification message, connecting, by the detected apparatus, the reference antenna and sending a detection signal by using the connected reference antenna; and after sending the notification message, receiving, by the detection apparatus, the detection signal sent by the detected apparatus by using the reference antenna.

In this aspect of this application, the reference antenna may be an antenna that sends a detection signal having a maximum signal-to-noise ratio (that is, a maximum signal power) among detection signals sent by antennas in the array antenna, to improve accuracy of signal parameters of the determined reference antenna and another antenna and improve array antenna calibration precision. The detection apparatus may receive, based on the following method, a detection signal sent by the detected apparatus by using the reference antenna: receiving, by the detection apparatus, detection signals separately sent by the detected apparatus by using all antennas in the array antenna, determining a detection signal among the detection signals that has a maximum signal-to-noise ratio, that is, a maximum signal power, and using the detection signal as the received detection signal sent by the detected apparatus by using the reference antenna.

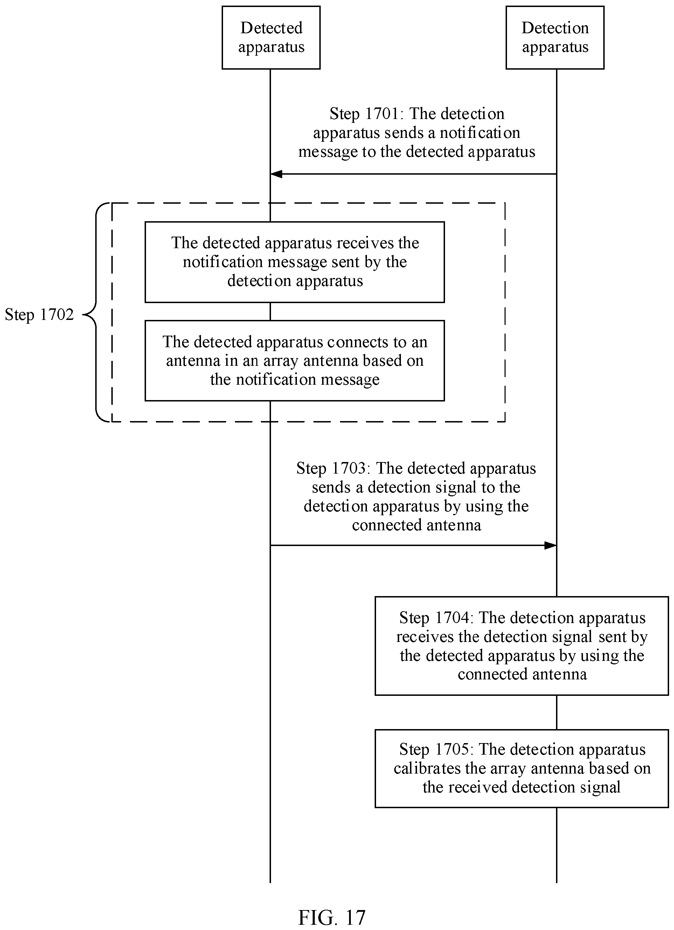

As shown in FIG. 17, a method for calibrating an array antenna by using the second system for calibrating an array antenna according to an aspect of this aspect includes the following steps.

Step 1701: A detection apparatus sends a notification message to a detected apparatus, where the notification message includes information about an antenna that the detected apparatus is to connect to.

Step 1702: The detected apparatus receives the notification message sent by the detection apparatus, and connects to the antenna in the array antenna based on the notification message.

Step 1703: The detected apparatus sends a detection signal by using the connected antenna.

Step 1704: The detection apparatus receives the detection signal sent by the detected apparatus by using the connected antenna.

Step 1705: The detection apparatus calibrates the array antenna based on the received detection signal.

By means of the foregoing method, the detection apparatus instructs, according to step 1701 by using the notification message, the detected apparatus to connect to the antenna in array antenna and send the detection signal by using the connected antenna; and after receiving, according to step 1704, the detection signal sent by the detected apparatus, the detection apparatus may determine the antenna used by the detected apparatus to send the detection signal, so that the detection apparatus can calibrate the array antenna based on received detection signals of different antennas. In this way, a collection channel does not need to be constructed at an input port of each antenna in the array antenna in an array antenna calibration process; therefore, array antenna calibration efficiency can be improved and array antenna calibration complexity can be decreased, thereby improving array antenna calibration efficiency.

The scope of protection shall be defined by the appended claims.

**Claims**

1. A method for calibrating an array antenna, the method comprising:

   successively connecting (901), by a detected apparatus, to different antennas in the array antenna at different moments in a preset sequence;
   and for each connected antenna of the different antennas:

   sending (902), by the detected apparatus, a trigger signal to a detection apparatus when the detected apparatus connects to the connected antenna, wherein the trigger signal indicates that the detected apparatus switches to the connected antenna;
   sending a detection signal to the detection apparatus by using the connected antenna, wherein the trigger signal and the detection signal are different; and
   receiving (903), by the detection apparatus, the trigger signal, and determining the connected antenna when the detected apparatus sends the trigger signal based on the preset sequence in which the detected apparatus separately connects to different antennas in the array antenna; and
   after receiving the trigger signal and determining the connected antenna, receiving, by the detection apparatus, the detection signal sent by the detected apparatus by using the connected antenna; and
   calibrating (904), by the detection apparatus, the array antenna based on the received detection signal;
   wherein calibrating, by the detection apparatus, the array antenna based on received detection signals, comprises:

   determining, by the detection apparatus, a carrier frequency of a reference antenna based on a received detection signal sent by the reference antenna, wherein the reference antenna is any antenna in the array antenna other than the connected antenna;
   determining, by the detection apparatus, a signal parameter of the reference antenna based on the carrier frequency of the reference antenna, and determining a signal parameter of the connected antenna based on the carrier frequency of the reference antenna and a received detection signal sent by the connected antenna, wherein the connected antenna is any antenna in the array antenna other than the reference antenna; and
   calibrating, by the detection apparatus, the connected antenna based on the signal parameter of the reference antenna and the signal parameter of the connected antenna, wherein the signal parameters comprise a signal carrier amplitude and/or a signal phase.

2. The method according to claim 1, wherein the determining the connected antenna when the detected apparatus sends the trigger signal based on the preset sequence in which the detected apparatus separately connects to different antennas in the array antenna comprises:
   in a period between a moment at which the detection apparatus receives the trigger signal for an $n^{th}$ time and a moment at which the detection apparatus receives the trigger signal for an $(n+1)^{th}$ time, determining, by the detection apparatus, that the detected apparatus connects to an $(MOD (n, N))^{th}$ antenna in the array antenna in the preset sequence, wherein N is a total quantity of antennas in the array antenna, and n and N are positive integers.

3. The method according to claim 1, wherein the receiving, by the detection apparatus, the detection signal sent by the detected apparatus by using the connected antenna comprises:
   in a period between a moment at which the detection apparatus receives the trigger signal for an $n^{th}$ time and a moment at which the detection apparatus receives the trigger signal for an $(n+1)^{th}$ time, receiving, by the detection apparatus, a detection signal sent by the connected antenna determined based on the trigger signal received for the $n^{th}$ time, wherein n is a positive integer.

4. A system for calibrating an array antenna, the system comprising a detected apparatus for sending a detection signal for calibrating an array antenna, comprising a memory, a transceiver and a processor, the memory storing a set of instructions which when executed by the processor cause the detected apparatus to perform the steps of:

successively connecting (901), by a detected apparatus, to different antennas in the array antenna at different moments in a preset sequence;
and for each connected antenna of the different antennas:

sending (902), by the detected apparatus, a trigger signal to a detection apparatus when the detected apparatus connects to the connected antenna, wherein the trigger signal indicates that the detected apparatus switches to the connected antenna; and
sending a detection signal to the detection apparatus by using the connected antenna, wherein the trigger signal and the detection signal are different;
wherein the detection apparatus for receiving the detection signal for calibrating an array antenna, comprises a memory, a transceiver and a processor, the memory storing a set of instructions which when executed by the processor cause the detection apparatus to perform, for each connected antenna of the different antennas, the steps of:

receiving, by the detection apparatus, the trigger signal, and determining the connected antenna when the detected apparatus sends the trigger signal based on the preset sequence in which the detected apparatus separately connects to different antennas in the array antenna; and
after receiving the trigger signal and determining the connected antenna, receiving, by the detection apparatus, the detection signal sent by the detected apparatus by using the connected antenna; and
calibrating, by the detection apparatus, the array antenna based on the received detection signal;
wherein the step of calibrating the array antenna based on received detection signals comprises the steps of:

determining a carrier frequency of a reference antenna based on a received detection signal sent by the reference antenna, wherein the reference antenna is any antenna in the array antenna other than the connected antenna;
determining a signal parameter of the reference antenna based on the carrier frequency of the reference antenna, and determining a signal parameter of the connected antenna based on the carrier frequency of the reference antenna and a received detection signal sent by the connected antenna, wherein the connected antenna is any antenna in the array antenna other than the reference antenna; and
calibrating the connected antenna based on the signal parameter of the reference antenna and the signal parameter of the connected antenna, wherein the signal parameters comprise a signal carrier amplitude and/or a signal phase.

5. The system according to claim 4, wherein the determining the connected antenna when the detected apparatus sends the trigger signal based on the preset sequence in which the detected apparatus separately connects to different antennas in the array antenna comprises:
in a period between a moment at which the detection apparatus receives the trigger signal for an $n^{th}$ time and a moment at which the detection apparatus receives the trigger signal for an $(n+1)^{th}$ time, determining, by the detection apparatus, that the detected apparatus connects to an $(MOD (n, N))^{th}$ antenna in the array antenna in the preset sequence, wherein N is a total quantity of antennas in the array antenna, and n and N are positive integers.

6. The system according to claim 4, wherein the receiving, by the detection apparatus, the detection signal sent by the detected apparatus by using the connected antenna comprises:
in a period between a moment at which the detection apparatus receives the trigger signal for an $n^{th}$ time and a moment at which the detection apparatus receives the trigger signal for an $(n+1)^{th}$ time, receiving, by the detection apparatus, a detection signal sent by the connected antenna determined based on the trigger signal received for the $n^{th}$ time, wherein n is a positive integer.

**Patentansprüche**

1. Verfahren zur Kalibrierung einer Gruppenantenne, wobei das Verfahren umfasst:

   aufeinanderfolgendes Verbinden (901) mit unterschiedlichen Antennen in der Gruppenantenne durch eine detektierte Vorrichtung zu unterschiedlichen Zeitpunkten in einer vorgegebenen Sequenz;
   und für jede verbundene Antenne der unterschiedlichen Antennen:

   Senden (902) eines Auslösesignals durch die detektierte Vorrichtung zu einer Detektionsvorrichtung, wenn die detektierte Vorrichtung die Verbindung mit der verbundenen Antenne herstellt, wobei das Auslösesignal angibt, dass die detektierte Vorrichtung zu der verbundenen Antenne umschaltet;
   Senden eines Detektionssignals zu der Detektionsvorrichtung unter Verwendung der verbundenen Antenne, wobei das Auslösesignal und das Detektionssignal unterschiedlich sind; und
   Empfangen (903) des Auslösesignals durch die Detektionsvorrichtung und Ermitteln der verbundenen Antenne, wenn die detektierte Vorrichtung das Auslösesignal basierend auf der vorgegebenen Sequenz sendet, in der die detektierte Vorrichtung separat eine Verbindung mit unterschiedlichen Antennen in der Gruppenantenne herstellt; und
   nach dem Empfangen des Auslösesignals und dem Ermitteln der verbundenen Antenne, Empfangen des durch die detektierte Vorrichtung unter Verwendung der verbundenen Antenne gesendeten Detektionssignals durch die Detektionsvorrichtung; und
   Kalibrieren (904) der Gruppenantenne durch die Detektionsvorrichtung, basierend auf dem empfangenen Detektionssignal;
   wobei das Kalibrieren der Gruppenantenne durch die Detektionsvorrichtung, basierend auf empfangenen Detektionssignalen, umfasst:

   Ermitteln einer Trägerfrequenz einer Referenzantenne durch die Detektionsvorrichtung, basierend auf einem empfangenen von der Referenzantenne gesendeten Detektionssignal, wobei die Referenzantenne eine beliebige von der verbundenen Antenne unterschiedliche Antenne in der Gruppenantenne ist;
   Ermitteln eines Signalparameters der Referenzantenne durch die Detektionsvorrichtung, basierend auf der Trägerfrequenz der Referenzantenne, und
   Ermitteln eines Signalparameters der verbundenen Antenne, basierend auf der Trägerfrequenz der Referenzantenne und einem empfangenen, von der verbundenen Antenne gesendeten Detektionssignal, wobei die verbundene Antenne eine beliebige von der Referenzantenne unterschiedliche Antenne in der Gruppenantenne ist; und
   Kalibrieren der verbundenen Antenne durch die Detektionsvorrichtung, basierend auf dem Signalparameter der Referenzantenne und dem Signalparameter der verbundenen Antenne, wobei die Signalparameter eine Signalträgeramplitude und/oder eine Signalphase umfassen.

2. Verfahren nach Anspruch 1, wobei das Ermitteln der verbundenen Antenne, wenn die detektierte Vorrichtung das Auslösesignal basierend auf der vorgegebenen Sequenz sendet, in der die detektierte Vorrichtung separat eine Verbindung mit unterschiedlichen Antennen in der Gruppenantenne herstellt, umfasst:

   in einem Zeitraum zwischen einem Zeitpunkt, zu dem die Detektionsvorrichtung zu einem n-ten Mal das Auslösesignal empfängt, und einem Zeitpunkt, zu dem die Detektionsvorrichtung das Auslösesignal zu einem (n+1)-ten Mal empfängt,
   Feststellen durch die Detektionsvorrichtung, dass die detektierte Vorrichtung eine Verbindung mit einer (MOD (n, N))-ten Antenne in der Gruppenantenne in der vorgegebenen Sequenz herstellt, wobei N eine Gesamtmenge von Antennen in der Gruppenantenne ist und n und N positive Ganzzahlen sind.

3. Verfahren nach Anspruch 1, wobei das Empfangen des durch die detektierte Vorrichtung unter Verwendung der verbundenen Antenne gesendeten Detektionssignals durch die Detektionsvorrichtung umfasst:
   in einem Zeitraum zwischen einem Zeitpunkt, zu dem die Detektionsvorrichtung zu einem n-ten Mal das Auslösesignal empfängt, und einem Zeitpunkt, zu dem die Detektionsvorrichtung das Auslösesignal zu einem (n+1)-ten Mal empfängt, Empfangen, durch die Detektionsvorrichtung, eines von der verbundenen Antenne gesendeten Detektionssignals, ermittelt basierend auf dem zum n-ten Mal empfangenen Auslösesignal, wobei n eine positive Ganzzahl ist.

**4.** System zur Kalibrierung einer Gruppenantenne, wobei das System eine detektierte Vorrichtung zum Senden eines Detektionssignals zur Kalibrierung einer Gruppenantenne umfasst, umfassend einen Speicher, einen Sendeempfänger und einen Prozessor, wobei der Speicher einen Satz von Anweisungen speichert, die bei Ausführung durch den Prozessor die detektierte Vorrichtung zum Durchführen der folgenden Schritte veranlassen:

aufeinanderfolgendes Verbinden (901) mit unterschiedlichen Antennen in der Gruppenantenne durch eine detektierte Vorrichtung zu unterschiedlichen Zeitpunkten in einer vorgegebenen Sequenz; und für jede verbundene Antenne der unterschiedlichen Antennen:

Senden (902) eines Auslösesignals durch die detektierte Vorrichtung zu einer Detektionsvorrichtung, wenn die detektierte Vorrichtung die Verbindung mit der verbundenen Antenne herstellt, wobei das Auslösesignal angibt, dass die detektierte Vorrichtung zu der verbundenen Antenne umschaltet; und Senden eines Detektionssignals zu der Detektionsvorrichtung unter Verwendung der verbundenen Antenne, wobei das Auslösesignal und das Detektionssignal unterschiedlich sind; wobei die Detektionsvorrichtung zum Empfangen des Detektionssignals zur Kalibrierung einer Gruppenantenne einen Speicher, einen Sendeempfänger und einen Prozessor umfasst, wobei der Speicher einen Satz von Anweisungen speichert, die bei Ausführung durch den Prozessor die Detektionsvorrichtung für jede verbundene Antenne der unterschiedlichen Antennen zum Durchführen der folgenden Schritte veranlassen:

Empfangen des Auslösesignals durch die Detektionsvorrichtung und Ermitteln der verbundenen Antenne, wenn die detektierte Vorrichtung das Auslösesignal basierend auf der vorgegebenen Sequenz sendet, in der die detektierte Vorrichtung separat eine Verbindung mit unterschiedlichen Antennen in der Gruppenantenne herstellt; und nach dem Empfangen des Auslösesignals und dem Ermitteln der verbundenen Antenne, Empfangen des durch die detektierte Vorrichtung unter Verwendung der verbundenen Antenne gesendeten Detektionssignals durch die Detektionsvorrichtung; und Kalibrieren der Gruppenantenne durch die Detektionsvorrichtung, basierend auf dem empfangenen Detektionssignal; wobei der Schritt des Kalibrierens der Gruppenantenne basierend auf empfangenen Detektionssignalen die folgenden Schritte umfasst:

Ermitteln einer Trägerfrequenz einer Referenzantenne, basierend auf einem empfangenen, von der Referenzantenne gesendeten Detektionssignal, wobei die Referenzantenne eine beliebige von der verbundenen Antenne unterschiedliche Antenne in der Gruppenantenne ist; Ermitteln eines Signalparameters der Referenzantenne, basierend auf der Trägerfrequenz der Referenzantenne, und Ermitteln eines Signalparameters der verbundenen Antenne, basierend auf der Trägerfrequenz der Referenzantenne und einem empfangenen, von der verbundenen Antenne gesendeten Detektionssignal, wobei die verbundene Antenne eine beliebige von der Referenzantenne unterschiedliche Antenne in der Gruppenantenne ist; und Kalibrieren der verbundenen Antenne, basierend auf dem Signalparameter der Referenzantenne und dem Signalparameter der verbundenen Antenne, wobei die Signalparameter eine Signalträgeramplitude und/oder eine Signalphase umfassen.

**5.** System nach Anspruch 4, wobei das Ermitteln der verbundenen Antenne, wenn die detektierte Vorrichtung das Auslösesignal basierend auf der vorgegebenen Sequenz sendet, in der die detektierte Vorrichtung separat eine Verbindung mit unterschiedlichen Antennen in der Gruppenantenne herstellt, umfasst:

in einem Zeitraum zwischen einem Zeitpunkt, zu dem die Detektionsvorrichtung zu einem n-ten Mal das Auslösesignal empfängt, und einem Zeitpunkt, zu dem die Detektionsvorrichtung das Auslösesignal zu einem (n+1)-ten Mal empfängt, Feststellen durch die Detektionsvorrichtung, dass die detektierte Vorrichtung eine Verbindung mit einer (MOD (n, N))-ten Antenne in der Gruppenantenne in der vorgegebenen Sequenz herstellt, wobei N eine Gesamtmenge von Antennen in der Gruppenantenne ist und n und N positive Ganzzahlen sind.

**6.** System nach Anspruch 4, wobei das Empfangen des durch die detektierte Vorrichtung unter Verwendung der verbundenen Antenne gesendeten Detektionssignals durch die Detektionsvorrichtung umfasst:

in einem Zeitraum zwischen einem Zeitpunkt, zu dem die Detektionsvorrichtung zu einem n-ten Mal das Auslösesignal empfängt, und einem Zeitpunkt, zu dem die Detektionsvorrichtung das Auslösesignal zu einem (n+1)-ten Mal empfängt:

Empfangen, durch die Detektionsvorrichtung, eines von der verbundenen Antenne gesendeten Detektionssignals, ermittelt basierend auf dem zum n-ten Mal empfangenen Auslösesignal, wobei n eine positive Ganzzahl ist.

**Revendications**

1. Procédé d'étalonnage d'une antenne réseau, le procédé comprenant :

la connexion successive (901), par un appareil détecté, à différentes antennes dans l'antenne réseau à différents moments en une séquence prédéfinie ;
et pour chaque antenne connectée des différentes antennes :

l'envoi (902), par l'appareil détecté, d'un signal de déclenchement à un appareil de détection lorsque l'appareil détecté se connecte à l'antenne connectée, dans lequel le signal de déclenchement indique que l'appareil détecté se commute sur l'antenne connectée ;
l'envoi d'un signal de détection à l'appareil de détection au moyen de l'antenne connectée, dans lequel le signal de déclenchement et le signal de détection sont différents ; et
la réception (903), par l'appareil de détection, du signal de déclenchement, et la détermination de l'antenne connectée lorsque l'appareil détecté envoie le signal de déclenchement sur la base de la séquence prédéfinie dans laquelle l'appareil détecté se connecte séparément à différentes antennes dans l'antenne réseau ; et
après la réception du signal de déclenchement et la détermination de l'antenne connectée, la réception, par l'appareil de détection, du signal de détection envoyé par l'appareil détecté au moyen de l'antenne connectée ; et
l'étalonnage (904), par l'appareil de détection, de l'antenne réseau sur la base du signal de détection reçu ;
dans lequel l'étalonnage, par l'appareil de détection, de l'antenne réseau sur la base des signaux de détection reçus comprend :

la détermination, par l'appareil de détection, d'une fréquence porteuse d'une antenne de référence sur la base d'un signal de détection reçu envoyé par l'antenne de référence, dans lequel l'antenne de référence est toute antenne dans l'antenne réseau autre que l'antenne connectée ;
la détermination, par l'appareil de détection, d'un paramètre de signal de l'antenne de référence sur la base de la fréquence porteuse de l'antenne de référence, et la détermination d'un paramètre de signal de l'antenne connectée sur la base de la fréquence porteuse de l'antenne de référence et d'un signal de détection reçu envoyé par l'antenne connectée, dans lequel l'antenne connectée est toute antenne dans l'antenne réseau autre que l'antenne de référence ; et
l'étalonnage, par l'appareil de détection, de l'antenne connectée sur la base du paramètre de signal de l'antenne de référence et du paramètre de signal de l'antenne connectée, dans lequel les paramètres de signal comprennent une amplitude de porteuse de signal et/ou une phase de signal.

2. Procédé selon la revendication 1, dans lequel la détermination de l'antenne connectée lorsque l'appareil détecté envoie le signal de déclenchement sur la base de la séquence prédéfinie dans laquelle l'appareil détecté se connecte séparément à différentes antennes dans l'antenne réseau comprend :
dans une période comprise entre un moment auquel l'appareil de détection reçoit le signal de déclenchement pour une $n^{ième}$ fois et un moment auquel l'appareil de détection reçoit le signal de déclenchement pour une $(n+1)^{ième}$ fois, la détermination, par l'appareil de détection, du fait que l'appareil détecté se connecte à une $(MOD (n, N))^{ième}$ antenne dans l'antenne réseau dans la séquence prédéfinie, dans lequel N est une quantité totale d'antennes dans l'antenne réseau, et n et N sont des entiers positifs.

3. Procédé selon la revendication 1, dans lequel la réception, par l'appareil de détection, du signal de détection envoyé par l'appareil détecté au moyen de l'antenne connectée comprend :
dans une période comprise entre un moment auquel l'appareil de détection reçoit le signal de déclenchement pour une $n^{ième}$ fois et un moment auquel l'appareil de détection reçoit le signal de déclenchement pour une $(n+1)^{ième}$ fois, la réception, par l'appareil de détection, d'un signal de détection envoyé par l'antenne connectée déterminée sur la base du signal de déclenchement reçu pour la $n^{ième}$ fois, dans lequel n est un entier positif.

**4.** Système d'étalonnage d'une antenne réseau, le système comprenant un appareil détecté destiné à envoyer un signal de détection pour l'étalonnage d'une antenne réseau, comprenant une mémoire, un émetteur-récepteur et un processeur, la mémoire stockant un ensemble d'instructions qui lorsqu'elles sont exécutées par le processeur, amènent l'appareil détecté à exécuter les étapes suivantes :

la connexion successive (901), par un appareil détecté, à différentes antennes dans l'antenne réseau à différents moments en une séquence prédéfinie ;
et pour chaque antenne connectée des différentes antennes :

l'envoi (902), par l'appareil détecté, d'un signal de déclenchement à un appareil de détection lorsque l'appareil détecté se connecte à l'antenne connectée, dans lequel le signal de déclenchement indique que l'appareil détecté se commute sur l'antenne connectée ;
l'envoi d'un signal de détection à l'appareil de détection au moyen de l'antenne connectée, dans lequel le signal de déclenchement et le signal de détection sont différents ;
dans lequel l'appareil de détection destiné à recevoir le signal de détection pour l'étalonnage d'une antenne réseau comprend une mémoire, un émetteur-récepteur et
un processeur, la mémoire stockant un ensemble d'instructions qui lorsqu'elles sont exécutées par le processeur, amènent l'appareil de détection à exécuter, pour chaque antenne connectée des différentes antennes, les étapes suivantes :

la réception, par l'appareil de détection, du signal de déclenchement, et la détermination de l'antenne connectée lorsque l'appareil détecté envoie le signal de déclenchement sur la base de la séquence prédéfinie dans laquelle l'appareil détecté se connecte séparément à différentes antennes dans l'antenne réseau ; et
après la réception du signal de déclenchement et la détermination de l'antenne connectée, la réception, par l'appareil de détection, du signal de détection envoyé par l'appareil détecté au moyen de l'antenne connectée ; et
l'étalonnage, par l'appareil de détection, de l'antenne réseau sur la base du signal de détection reçu ;
dans lequel l'étape d'étalonnage de l'antenne réseau sur la base des signaux de détection reçus comprend les étapes suivantes :

la détermination d'une fréquence porteuse d'une antenne de référence sur la base d'un signal de détection reçu envoyé par l'antenne de référence, dans lequel l'antenne de référence est toute antenne dans l'antenne réseau autre que l'antenne connectée ;
la détermination d'un paramètre de signal de l'antenne de référence sur la base de la fréquence porteuse de l'antenne de référence, et la détermination d'un paramètre de signal de l'antenne connectée sur la base de la fréquence porteuse de l'antenne de référence et d'un signal de détection reçu envoyé par l'antenne connectée, dans lequel l'antenne connectée est toute antenne dans l'antenne réseau autre que l'antenne de référence ; et
l'étalonnage de l'antenne connectée sur la base du paramètre de signal de l'antenne de référence et du paramètre de signal de l'antenne connectée, dans lequel les paramètres de signal comprennent une amplitude de porteuse de signal et/ou une phase de signal.

**5.** Système selon la revendication 4, dans lequel la détermination de l'antenne connectée lorsque l'appareil détecté envoie le signal de déclenchement sur la base de la séquence prédéfinie dans laquelle l'appareil détecté se connecte séparément à différentes antennes dans l'antenne réseau comprend :
dans une période comprise entre un moment auquel l'appareil de détection reçoit le signal de déclenchement pour une $n^{ième}$ fois et un moment auquel l'appareil de détection reçoit le signal de déclenchement pour une $(n+1)^{ième}$ fois, la détermination, par l'appareil de détection, du fait que l'appareil détecté se connecte à une $(MOD(n, N))^{ième}$ antenne dans l'antenne réseau dans la séquence prédéfinie, dans lequel N est une quantité totale d'antennes dans l'antenne réseau, et n et N sont des entiers positifs.

**6.** Système selon la revendication 4, dans lequel la réception, par l'appareil de détection, du signal de détection envoyé par l'appareil détecté au moyen de l'antenne connectée comprend :
dans une période comprise entre un moment auquel l'appareil de détection reçoit le signal de déclenchement pour une $n^{ième}$ fois et un moment auquel l'appareil de détection reçoit le signal de déclenchement pour une $(n+1)^{ième}$ fois, la réception, par l'appareil de détection, d'un signal de détection envoyé par l'antenne connectée déterminée sur la base du signal de déclenchement reçu pour la $n^{ième}$ fois, dans lequel n est un entier positif.

FIG. 1

201

```
Detected apparatus
```

202

```
Detection apparatus
```

FIG. 2

FIG. 3

FIG. 4

FIG. 5

FIG. 6

EP 3 641 165 B1

FIG. 7

801

A detection apparatus determines a carrier frequency of a reference antenna based on a received detection signal sent by the reference antenna

802

The detection apparatus determines a signal parameter of the reference antenna based on the carrier frequency of the reference antenna, and determines a signal parameter of another antenna based on the carrier frequency of the reference antenna and a received detection signal sent by the another antenna

803

The detection apparatus determines a signal amplitude difference and/or a signal phase difference between the reference antenna and the another antenna based on the signal parameter of the reference antenna and the signal parameter of the another antenna

804

The detection apparatus calibrates the array antenna based on the signal amplitude difference and/or the signal phase difference between the reference antenna and the another antenna

FIG. 8

Detected apparatus

Detection apparatus

Step 901: The detected apparatus connects to an antenna in an array antenna in a preset sequence

Step 902

When connecting to the antenna in the array antenna, the detected apparatus sends a trigger signal to the detection apparatus

The detected apparatus sends a detection signal to the detection apparatus by using the connected antenna

Step 903

The detection apparatus determines, in the preset sequence, the antenna connected when the detected apparatus sends the trigger signal

The detection apparatus receives the detection signal sent by the detected apparatus by using the connected antenna

Step 904: The detection apparatus calibrates the array antenna based on the received detection signal

FIG. 9

```
┌──────────────┐                              ┌──────────────┐
│  Detected    │                              │  Detection   │
│  apparatus   │                              │  apparatus   │
└──────┬───────┘                              └──────┬───────┘
       │                                             │
┌──────┴───────────────────────────────┐            │
│ Step 1001: The detected apparatus     │            │
│ connects to an antenna in an array    │            │
│ antenna                               │            │
└──────┬────────────────────────────────┘           │
```

When connecting the antenna in the array antenna, the detected apparatus sends a trigger signal to the detection apparatus

Step 1002

The detected apparatus sends a detection signal to the detection apparatus by using the connected antenna

Step 1003

The detection apparatus determines, based on the trigger signal, the antenna connected when the detected apparatus sends the trigger signal

The detection apparatus receives the detection signal sent by the detected apparatus by using the connected antenna

Step 1004: The detection apparatus calibrates the array antenna based on the received detection signal

FIG. 10

1101

Detected apparatus

1102

Detection apparatus

FIG. 11

1101

1204

Transceiver

1202

Processor

1201

Detection signal generation apparatus

1203

Channel switch

Array antenna

FIG. 12

1102

1301

Transceiver

1302

1303

Collection antenna

Processor

FIG. 13

FIG. 14

FIG. 15

Send by using an
antenna indicated by
an $n^{th}$ notification
message

Send by using an
antenna indicated
by an $(n+1)^{th}$
notification message

...

Detection
signal

Trigger
signal

$n^{th}$ notification
message

$(n+1)^{th}$ notification
message

...

Time

FIG. 16

Detected apparatus

Detection apparatus

Step 1701: The detection apparatus sends a notification message to the detected apparatus

Step 1702

The detected apparatus receives the notification message sent by the detection apparatus

The detected apparatus connects to an antenna in an array antenna based on the notification message

Step 1703: The detected apparatus sends a detection signal to the detection apparatus by using the connected antenna

Step 1704: The detection apparatus receives the detection signal sent by the detected apparatus by using the connected antenna

Step 1705: The detection apparatus calibrates the array antenna based on the received detection signal

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010150013 A

- EP 1513271 A

**Non-patent literature cited in the description**

- Phased array calibration. **SORACE R.** PHASED ARRAY SYSTEMS AND TECHNOLOGY, 2000. PROCEEDINGS. 2000 IEEE INTERNATIONAL CONFERENCE ON DANA POINT, CA, USA 21-25 MAY 2000, PISCATAWAY, NJ, USA. IEEE, 21 May 2000, 533-536